(19) Europäisches Patentamt / European Patent Office / Office européen des brevets

(11) **EP 4 741 815 A1**

(12) **EUROPEAN PATENT APPLICATION**
published in accordance with Art. 153(4) EPC

(43) Date of publication:
**13.05.2026 Bulletin 2026/20**

(21) Application number: **24835720.4**

(22) Date of filing: **17.01.2024**

(51) International Patent Classification (IPC):
*G01N 27/83* (2006.01)

(52) Cooperative Patent Classification (CPC):
**G01N 27/83**

(86) International application number:
**PCT/JP2024/001076**

(87) International publication number:
**WO 2025/009196 (09.01.2025 Gazette 2025/02)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **05.07.2023 JP 2023110720**

(71) Applicant: **Hitachi, Ltd.**
**Tokyo 100-8280 (JP)**

(72) Inventor: **KAWABATA, Ryuzo**
**Tokyo 100-8280 (JP)**

(74) Representative: **Mewburn Ellis LLP**
**Aurora Building**
**Counterslip**
**Bristol BS1 6BX (GB)**

(54) **METAL BODY MONITORING DEVICE AND METAL BODY MONITORING METHOD**

(57) A metal body monitoring apparatus has a magnetic detection device, a distance detection device, and a processing device. The magnetic detection device has a magnetic sensor unit, and the magnetic sensor unit is provided on a moving body that relatively moves over a metal body, and detects a generated leakage magnetic field in a non-contact manner. The distance detection device is provided on the moving body and detects a movement distance relative to the metal body of the moving body. The processing device converts first data representing the time-series of the detection signal strength from the magnetic detection device into second data representing a relationship between the movement distance and the detection signal strength based on the movement distance at each time point detected by the distance detection device. The processing device extracts a spectral response in a wave number space specified from the second data, and outputs monitoring information which is information based on the extracted spectral response.

FIG. 1

## Description

[Technical Field]

The present invention relates generally to monitoring of a metal body.

[Background Art]

Examples of a metal body include a wire rope. As an example of a monitoring apparatus for a wire rope, a deterioration determination apparatus for a wire rope is disclosed in Patent Literature 1. Patent Literature 1 discloses that "a deterioration determination apparatus for a wire rope includes a detector 30 that detects a deterioration of a wire rope by a magnetic leakage flux method, a data input unit 31 that acquires measurement data from the detector 30, noise component removal means that removes noise components from the data input unit 31, and waveform processing means that extracts data determined as having high correlation with a deterioration factor of the wire rope".

[Citation List]

[Patent Literature]

[Patent Literature 1] Japanese Patent Laid-Open No. 2022-52864

[Summary of Invention]

[Technical Problem]

Patent Literature 1 discloses the deterioration determination apparatus for a wire rope that detects a deterioration of a wire rope by using a magnetic leakage flux method.
In this apparatus, a signal waveform of a detection signal may change depending on a velocity at which the wire rope passes through the detector. In addition, in this apparatus, there is noise (for example, offset drift associated with fluctuation of a position of the detector, and external noise) generated due to an environment or a state in the monitoring of the wire rope, and this noise affects the signal waveform of the detection signal. Therefore, it is difficult to discriminate between a peculiar point which is a point different from a sound portion in the wire rope and the sound portion based on the detection signal (in particular, whether a peculiar point is a damaged point).
Patent Literature 1 does not disclose peculiar point discrimination for the wire rope, and a method therefor.
Such a problem may also occur in a case where the metal body is a metal body other than a wire rope. In addition, such a problem may occur in a metal body monitoring environment in general in which a magnetic sensor unit (for example, a detector) not in contact with a metal body relatively moves over the metal body.
An object of the invention is to enable peculiar point discrimination for a metal body to be monitored in such a metal body monitoring environment.

[Solution to Problem]

To solve the above problem, a typical metal body monitoring apparatus of the invention has a magnetic detection device, a distance detection device, and a processing device connected to the magnetic detection device and the distance detection device. The magnetic detection device has a magnetic sensor unit, and the magnetic sensor unit is provided on a moving body that relatively moves over a metal body, and detects a generated leakage magnetic field in a non-contact manner. The distance detection device is provided in the moving body and detects a movement distance relative to the metal body of the moving body. The processing device converts first data representing the time-series of the detection signal strength from the magnetic detection device into second data representing a relationship between the movement distance and the detection signal strength based on the movement distance at each time point detected by the distance detection device. The processing device extracts a spectral response in a wave number space specified from the second data, and outputs monitoring information which is information based on the extracted spectral response.

[Advantageous Effects of Invention]

According to the invention, it is possible to enable peculiar point discrimination for a metal body in a metal body monitoring environment in which a magnetic sensor unit not in contact with a metal body relatively moves over the metal body. Problems, configuration, and effects other than those described above will be clarified by the following description of embodiments.

[Brief Description of the Drawings]

[Figure 1] Figure 1 is a schematic diagram of a metal body monitoring apparatus according to a first embodiment of the invention.
[Figure 2] Figure 2 is a perspective view of a magnetic detection device in the first embodiment.
[Figure 3] Figure 3 is a bottom view of the magnetic detection device in the first embodiment.
[Figure 4] Figure 4 is a partially cutaway plan view of the magnetic detection device in the first embodiment.
[Figure 5] Figure 5 is a schematic diagram illustrating an operating state of a magnetic sensor unit of the first embodiment.
[Figure 6] Figure 6 is a schematic diagram illustrating another operating state of the magnetic sensor unit of the first embodiment.
[Figure 7A] Figure 7A is an explanatory diagram of processes 1 to 3 regarding a monitoring information extraction and analysis process to which continuous wavelet analysis is applied in the metal body monitoring apparatus according to the first embodiment of the invention.
[Figure 7B] Figure 7B is an explanatory diagram of processes 4 to 6 regarding a monitoring information extraction and analysis process to which continuous wavelet analysis is applied in the metal body monitoring apparatus according to the first embodiment of the invention.
[Figure 7C] Figure 7C is an explanatory diagram of a process 5 regarding a monitoring information extraction and analysis process in a case where a short-time Fourier transform is used in the metal body monitoring apparatus according to the first embodiment of the invention.
[Figure 8A] Figure 8A is an explanatory diagram regarding interpolation processing of distance information conversion data in Figure 7A in the metal body monitoring apparatus according to a first embodiment of the invention.
[Figure 8B] Figure 8B is an explanatory diagram regarding interpolation processing of the distance information conversion data in Figure 7A in the metal body monitoring apparatus according to a first embodiment of the invention.
[Figure 9] Figure 9 is an explanatory diagram of hierarchical approximation by performing discrete wavelet processing in process 5 in Figure 7B in the metal body monitoring apparatus according to a first embodiment of the invention.
[Figure 10] Figure 10 is an explanatory diagram of hierarchical decomposition by performing discrete wavelet processing in process 5 in Figure 7B in the metal body monitoring apparatus according to a first embodiment of the invention.
[Figure 11] Figure 11 is a block diagram of the metal body monitoring apparatus according to the first embodiment.
[Figure 12] Figure 12 is a block diagram of a detection unit in a processing device.
[Figure 13] Figure 13 is a flowchart of a metal body monitoring processing program executed by an evaluation device.
[Figure 14] Figure 14 is a bottom view of a magnetic detection device in a second embodiment.
[Figure 15] Figure 15 is a partially cutaway plan view of the magnetic detection device in the second embodiment.
[Figure 16] Figure 16 is a block diagram of the metal body monitoring apparatus according to the second embodiment.
[Figure 17] Figure 17 is a diagram illustrating an example of a position of a peculiar point existing in a metal body and a contour representation of a signal strength distribution at its position.

[Description of Embodiments]

Several embodiments will be described below with reference to the drawings.

[First Embodiment]

<External Configuration of First Embodiment>

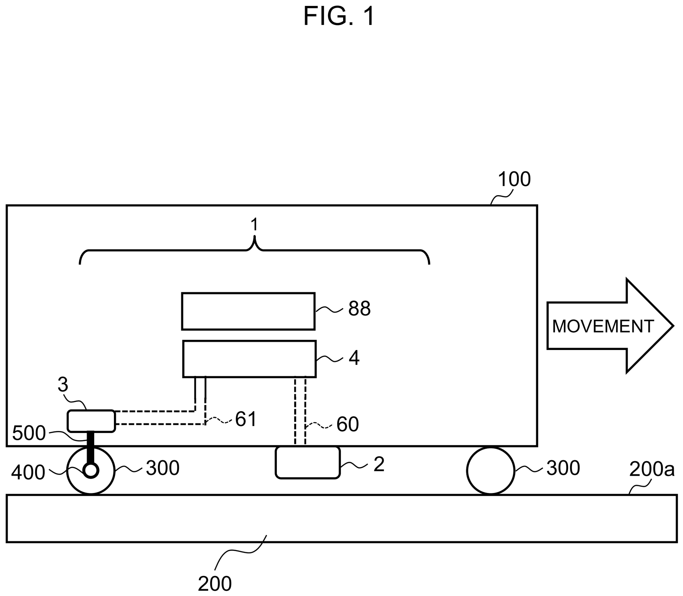

Figure 1 is a schematic diagram of a metal body monitoring apparatus according to a first embodiment of the invention.
In Figure 1, a metal body monitoring apparatus 1 includes a magnetic detection device 2, a distance detection device 3, a processing device 4, a power supply 88, and a connection cable 60. The metal body monitoring apparatus 1 is mounted on a moving body 100. A metal body 200 exists as an inspection target (monitoring target), the moving body 100 includes wheels 300 for traveling on the metal body 200, and the wheels 300 rotate while being in contact with a traveling surface 200a.
The magnetic detection device 2 is installed at a position facing the traveling surface 200a of the metal body 200, and the distance detection device 3, the processing device 4, and the power supply 88 are installed inside the moving body 100. The power supply 88 supplies a drive current to the magnetic detection device 2, the distance detection device 3, and the processing device 4 to operate the magnetic detection device 2, the distance detection device 3, and the processing device 4.

When the moving body 100 travels on the metal body 200, the magnetic detection device 2 detects a state of the metal body 200, and a signal representing a detection result is sent to the processing device 4 via the connection cable 60. An axle 400 of the wheels 300 of the moving body 100 is connected to the distance detection device 3 via a rotation drive mechanism 500, and an operation of the rotation drive mechanism 500 is detected by the distance detection device. Then, the processing device 4 collects each signal from the magnetic detection device 2 and the distance detection device 3, and executes processing such as analysis, and display using each signal. That is, the processing device 4 monitors the state of the metal body 200. In a case where an AC power supply is provided in the moving body 100, the power supply 88 may be a stabilized power supply circuit that is driven by the AC power supply. In a case where the AC power supply cannot be used, the power supply 88 may be an uninterruptible power supply device with a built-in battery.

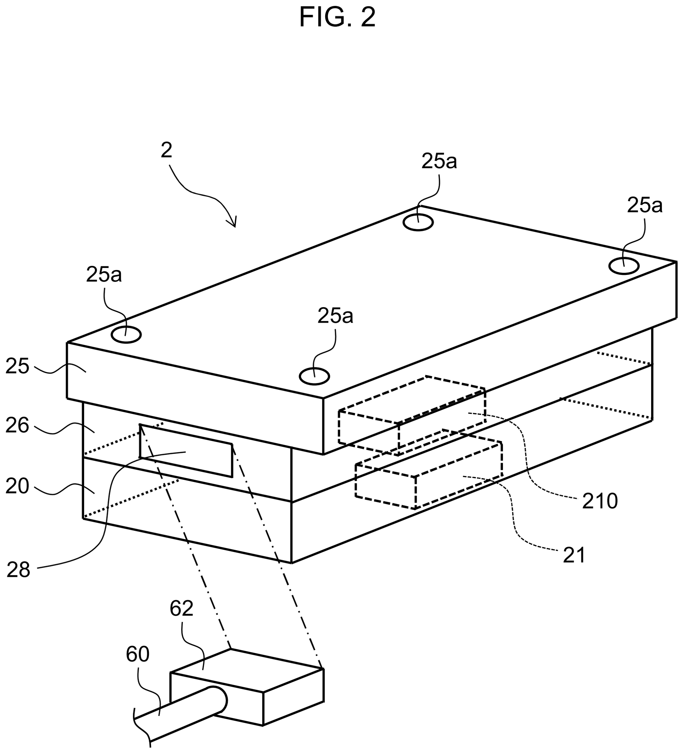

A structure of the magnetic detection device 2 will be described with reference to Figure 2.

Figure 2 is a perspective view of the magnetic detection device 2. As illustrated in Figure 2, the magnetic detection device 2 has an integral structure in which an upper housing 26 (an example of a second housing) and a lower housing 20 (an example of a first housing) are fixed to each other, and has a flange 25 on an upper side of the upper housing 26. The upper housing 26 and the lower housing 20 are formed in a rectangular parallelepiped shape, and a lower surface of the upper housing 26 and an upper surface of the lower housing 20 are joined. Also, the flange 25 formed in a rectangular shape is joined and fixed to an upper surface of the upper housing 26. One side surface of the upper housing 26 is provided with a connector 28, and one end of the connection cable 60 is provided with a connector 62. The connector 28 and the connector 62 can be fitted and connected to each other, and after the connection, the magnetic detection device 2 and the processing device 4 can communicate with each other through the connection cable 60. The connector 28 and the connector 62 have a dustproof and waterproof structure, and prevent foreign substances such as dust and water from entering the magnetic detection device 2 from an air gap when the connectors 28 and 62 are connected to each other to cause a failure of the magnetic detection device 2 and a poor connection of the connection cable 60. The connector 28 is suitably a feedthrough connector that is attached to one side face of the magnetic detection device 2 by being inserted and tightened thereinto, so that coming off or looseness of the connector due to vibrations can be prevented and dust and water ingress can be prevented, but any connector other than the feedthrough connector may be used which has a sufficient dustproof and waterproof function in a mounting environment of the magnetic detection device 2.

Through holes 25a are respectively formed in four corners of the flange. Further, the moving body 100 (see Figure 1) has a screw hole (not illustrated) at a position facing the through hole 25a in a location where the magnetic detection device 2 is placed. A bolt (not illustrated) is inserted into the through hole 25a with a washer (not illustrated) and tightened into the screw hole provided in the moving body 100, so that the magnetic detection device 2 is fixed at a predetermined position of the moving body 100. The lower housing 20 incorporates a magnetic sensor unit 21 for detecting a state of the metal body 200. The upper housing 26 also incorporates a preamplifier unit 210 that amplifies a magnetic signal detected by the magnetic sensor unit 21. Details of the magnetic sensor unit 21 and the preamplifier unit 210 will be described below.

When the magnetic detection device 2 is placed at the predetermined position of the moving body 100 to be used, it is necessary to take a measure against vibrations and shocks caused by swings when the moving body 100 moves on the metal body 200. Internal spaces of the upper housing 26 and the lower housing 20 are injected with a filler (not illustrated) having insulating and non-magnetic properties to form a resin mold structure. With this structure, the magnetic sensor unit 21 and the preamplifier unit 210 are firmly held inside the lower housing 20 and the upper housing 26, and thus damage to the magnetic sensor unit 21 and the preamplifier unit 210 due to swings caused by the movement of the moving body 100 and detection displacement of the magnetic sensor unit 21 can be prevented. In the example illustrated in Figure 2, the upper housing 26 and the lower housing 20 have a rectangular parallelepiped shape, but may have another shape such as a cubic shape, a columnar shape, and a prismatic shape according to conditions such as an installation space with respect to the moving body 100 to be used.

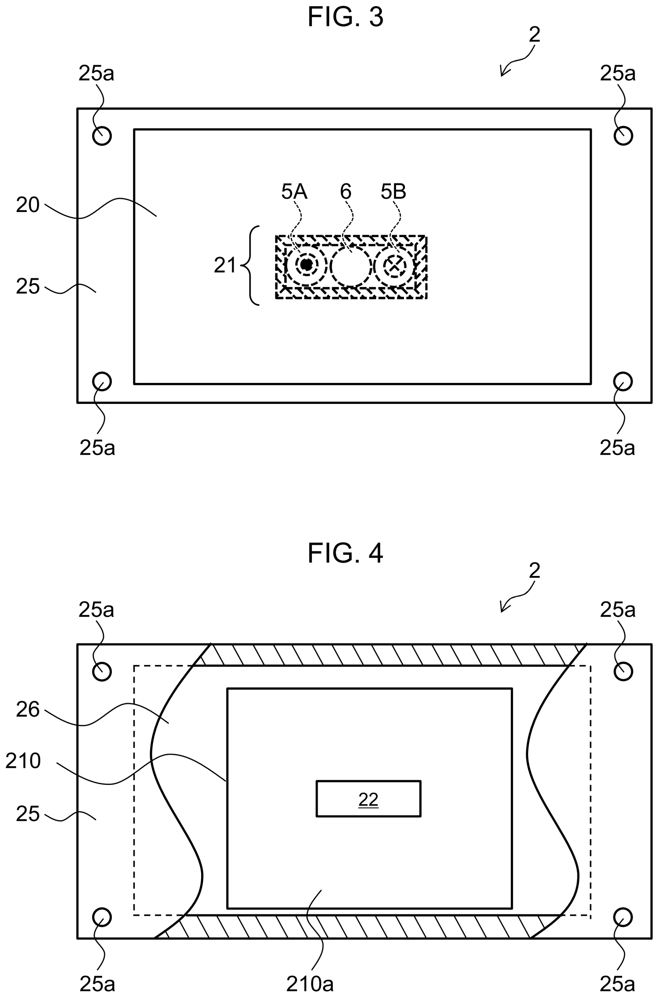

Configurations of the magnetic sensor unit 21 and the preamplifier unit 210 inside the magnetic detection device 2 will be described with reference to Figure 3 which is a bottom view of the magnetic detection device 2.

As illustrated in Figure 3, the magnetic sensor unit 21 includes an oscillation coil 5A, an oscillation coil 5B, and a reception coil 6, and each of these coils is produced by winding a coated copper wire. The reception coil 6 is located between the oscillation coil 5A and the oscillation coil 5B, and has an arrangement relationship in which a row of each coil is located to be parallel to a moving direction of the moving body 100 moving on the metal body 200. Alternating current of a predetermined oscillation frequency f (predetermined frequency) are supplied to the oscillation coil 5A and the oscillation coil 5B from the processing device 4 (see Figure 1) via the connection cable 60. As a result, alternating magnetic fields are generated respectively from the oscillation coil 5A and the oscillation coil 5B to excite the metal body 200. The magnetic flux generated from the excited metal body 200 generates an induced voltage in the reception coil 6.

Figure 4 is a partially cutaway plan view of the magnetic detection device 2, and illustrates an arrangement structure of the preamplifier unit 210 inside the upper housing 26.

In Figure 4, a center portion of the flange 25 is cut away to expose the inside of the upper housing. The preamplifier unit 210 includes a printed circuit board 210a on which an amplification filter circuit 22 is mounted. The amplification filter circuit 22 amplifies, and performs filtering processing on, the induced voltage generated in the reception coil 6, and transmits the amplified and filtered result to the processing device 4 via the connection cable 60 (see Figure 1). The processing device 4 performs analyzing processing on the received signal, and detects a magnetic signal generated from the metal body 200.

The upper housing 26 incorporating the preamplifier unit 210 is made of metal such as aluminum that functions as an electromagnetic shield. The use of a metal housing for the upper housing 26 makes it possible to shield electromagnetic generated from the preamplifier unit 210 and prevent electromagnetic waves from entering the preamplifier unit 210 from the outside of a use environment. When the flange 25 is provided in the upper housing 26 by a metal cutting process at the time of producing the upper housing 26, the flange 25 and the upper housing 26 are integrally formed, so that the number of components of the magnetic detection device 2 can be reduced and the strength can be increased. Further, in a case where aluminum is used for the upper housing 26, the surface hardness and the corrosion resistance can be improved and the insulating property can be provided, and thus the aluminum that has been subjected to an alumite treatment is more preferably adopted by which an oxide film is formed on an aluminum surface.

The lower housing 20 is made of a non-magnetic material. This is because the lower housing 20 incorporates the oscillation coil 5A and the oscillation coil 5B for generating alternating magnetic fields and the reception coil 6 for detecting a change in the magnetic field generated from the metal body. Also, since the magnetic detection device 2 is placed outside the moving body 100, and is used under movement of the moving body 100, the lower housing 20 is preferably made of a material such as fiber-reinforced resin, which has excellent toughness and corrosion resistance. For example, in a case where glass-fiber-reinforced plastic such as GFRP is used, a coating treatment is more preferably applied on a surface of the lower housing by using painting integrated by combining glass fiber or the like with a mixture of a liquid unsaturated polyester resin and a curing agent. A coated waterproof layer is formed by this coating treatment, so that the weather resistance of the lower housing can be further improved.

The lower housing 20 includes a screw-in insert nut (not illustrated) on a contact surface side with the upper housing 26, and is fixed to the upper housing 26 by screwing. The upper housing 26 and the lower housing 20 are integrated by bonding their contact surfaces with a silicone adhesive having excellent weather resistance and sealing an air gap.

The connection cable 60 connecting the magnetic detection device 2 and the processing device 4 includes a power supply line of the preamplifier unit 210, an output signal line of the reception coil via the amplification filter circuit 22, and input signal lines for excitation signals to the oscillation coil 5A and the oscillation coil 5B. When the connection cable 60 receives noise due to electromagnetic waves flying through a space, this affects the detection of the magnetic signal from the metal body 200. Therefore, the connection cable 60 is preferably a multi-pair shielded cable with excellent noise resistance, such as a twisted-pair shielded wire. Also, as a measure against crosstalk in the connection cable 60, the connection cable 60 may be split into two cables. In particular, one cable is preferably a multi-pair shielded cable that includes a power supply line of the preamplifier unit 210 and an output signal line of the reception coil from the amplification filter circuit. Also, the other cable is preferably another multi-pair shielded cable that includes input signal lines for excitation signals to the oscillation coil 5A and the oscillation coil 5B.

The connection cable 60 is fixed to a lower side of the moving body 100 facing the metal body 200, and is connected to the processing device 4 through an introduction portion provided in the moving body 100. The connection cable 60 is firmly fixed and held by using a fixture such as a binding band so that there is no slack of the connection cable 60 under the moving body 100 so as not to interfere with the movement of the moving body 100 and so as to prevent noise resulting from swing motion of the connection cable. When the connection cable 60 is fixed and held, a wiring route of the connection cable is preferably designed so that a length of the connection cable can be shortened as much as possible. As this wiring route is shorter, a risk of noise entering the detection signal from the magnetic detection device 2 through the connection cable 60 can be effectively avoided.

The distance detection device 3 that detects a movement distance of the moving body 100 will be described. The distance detection device 3 is a rotary encoder, and a pulse signal is generated by rotation of a rotary shaft of the rotary encoder. By counting this pulse signal, a movement amount accompanying the rotation of the rotary shaft can be calculated. Using the function of this rotary encoder, the rotation of the axle 400 in the wheels 300 of the moving body 100 is transmitted to the rotary shaft of the rotary encoder via the rotation drive mechanism 500. This rotation drive mechanism 500 includes a pulley attached to the axle 400 and the rotary shaft of the rotary encoder, and a timing belt. That is, when the moving body 100 moves, the axle 400 rotates according to the operation of the wheels, the movement of the axle is transmitted to the rotation drive mechanism 500, and the rotary shaft of the rotary encoder rotates simultaneously.

The pulse signal output from the rotary encoder is taken into the processing device 4 via the connection cable 61. This pulse signal is taken into the processing device 4 in a state in which the synchronization with the output signal from the magnetic detection device 2 is obtained in the processing device 4. The connection cable 61 is preferably a multi-pair shielded cable with excellent noise resistance, such as a twisted-pair shielded wire, similar to the connection cable 60. Although as the above-described rotary encoder, an incremental method that performs counting and measurement for integrating pulses generated in response to the rotation from a measurement start point has been described, an absolute rotary encoder that measures an absolute angular position of the rotary shaft of the rotary encoder can be also used. The rotary encoder includes an optical method that irradiates a slit disk included therein with light to operate rotary position information as an optical pulse signal that has passed through the slit disk, a magnetic method that outputs rotary position information by a rotating disk having a magnetic pattern formed thereon, as a pulse signal, based on cyclic changes in the magnetic field, an electrostatic method that includes a transmitter, a receiver, and a rotor that are fixed inside the encoder, and outputs a change in capacitance due to the rotation of the rotor as distance information, and a contact method that converts an electrical signal generated by electrical contacts in the encoder contacting due to the rotation of the rotary shaft into a rotation amount, and any method may be used as the rotary encoder.

<Principles of Detection of Peculiar Points in Metal Body>

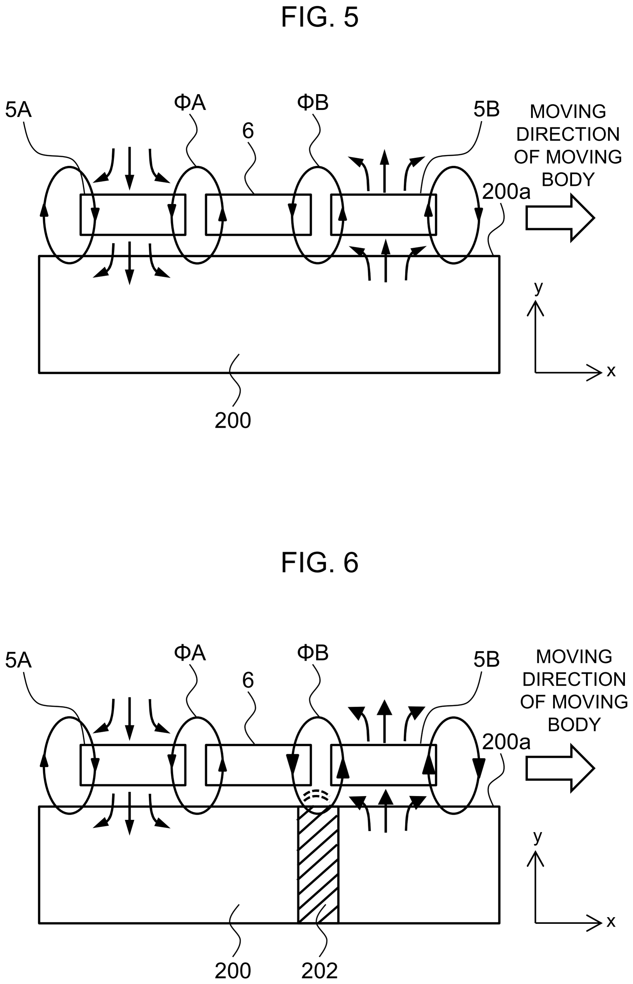

Figure 5 is a schematic diagram illustrating an operating state of the present embodiment. The oscillation coil 5A and the oscillation coil 5B generate alternating magnetic fields with reversed phases at the same time when an electric current is supplied from the processing device 4 (see Figure 1). In particular, the oscillation coil 5A and the oscillation coil 5B are connected in series (or in parallel) to each other at the start or end of the coated copper wire, and when an AC voltage is applied from the processing device 4, an alternating magnetic field is generated.

Then, when magnetic fluxes $\phi$A and $\phi$B generated from the oscillation coil 5A and the oscillation coil 5B propagate to the traveling surface 200a (see Figure 1) of the metal body 200, a magnetic flux flow occurs in the traveling surface 200a. Here, a moving direction of the moving body 100, which is a moving direction of the magnetic detection device and the distance movement device, is defined as an "x-direction". Also, a direction in which the magnetic flux of the reception coil 6 is detected, that is, a separation direction between the metal body 200 and the magnetic detection device 2 is defined as "y direction".

Figure 5 illustrates an example of the metal body 200 in which there is no change in the metal body state in a vicinity of the oscillation coil 5A, the oscillation coil 5B, and the reception coil 6. Here, a case where there is no change in the metal body state means a case where there is no damage due to defects such as a crack, or a case where there is no structural change in which metal bodies are connected to each other (for example, a structural body such as seam, weld, and bolt installation that does not involve damage). Magnetic flux components interlinking with the reception coil 6 are canceled because the magnetic fluxes $\phi$A and $\phi$B are in opposite directions, and the magnetic flux components depend on strength balance of the magnetic fluxes $\phi$A and $\phi$B. Therefore, when there is no change in the metal body state, the interlinkage magnetic flux of the reception coil 6 becomes almost zero, and the induced voltage of the reception coil 6 also becomes almost zero.

Figure 6 is a schematic diagram illustrating another operating state of the present embodiment.

Figure 6 illustrates an example in which a peculiar point 202 exists in the vicinity of the oscillation coil 5A, the oscillation coil 5B, and the reception coil 6. Here, the peculiar point 202 refers to a point having magnetic properties different from those of the ordinary metal body 200. In particular, the peculiar points 202 can be broadly classified into "damaged points" and "structural body points". That is, the peculiar point 202 is a damaged point or structural body point.

The meanings of the "x direction" and the "y direction" in Figure 6 are the same as in Figure 5. In the illustrated example, the flow of magnetic flux generated in the traveling surface 200a of the metal body 200 by the oscillation coils 5A and 5B is disturbed, and a magnetic flux leaks from the traveling surface 200a. Therefore, when the reception coil 6 passes over the peculiar point 202, an induced voltage change of the reception coil 6 is significantly larger than an induced voltage change in the case illustrated in Figure 5.

The metal body monitoring apparatus 1 in the present embodiment detects the generated leakage magnetic field based on the change in the flow of the magnetic flux generated in the metal body 200, which is an inspection target object, near the peculiar point 202. As an analytical model of this leakage magnetic field, the leakage magnetic field generated in a space can be expressed based on a dipole model. Here, as an example, a case is assumed where the peculiar point 202 is a structure which is a joining portion with an air gap in the metal body 200 in the model. In the leakage magnetic field component generated from the y direction of the metal body 200, a bipolar magnetic flux change having an extreme value (maximal value and minimal value) in the x direction appears with a central position of a seam as an inflection point when the moving body 100 is moving.

In the example described above, although the case where the structural body which is a joining portion with an air gap exists as the peculiar point in the metal body 200 is described, even when the peculiar point 202 has damage, the damage can be similarly detected. In a case where a crack as damage exists in the traveling surface 200a of the metal body 200, the permeability of the air gap of the damaged point is significantly different from the permeability of the metal body 200, so that a magnetic resistance is generated to disturb the flow of magnetic flux. Due to this turbulence of the magnetic flux flow, the magnetic flux flowing in the traveling surface 200a bypasses the crack, and a leakage magnetic flux is generated from the traveling surface 200a. Therefore, when the magnetic detection device 2 passes above the damaged point, strength balance of the magnetic fluxes φA and φB (see Figure 6) in the metal body 200 is disturbed, similar to when the structural body described above is detected. As a result, the magnetic detection device 2 can detect the presence of the damaged point.

<Monitoring of Metal Body>

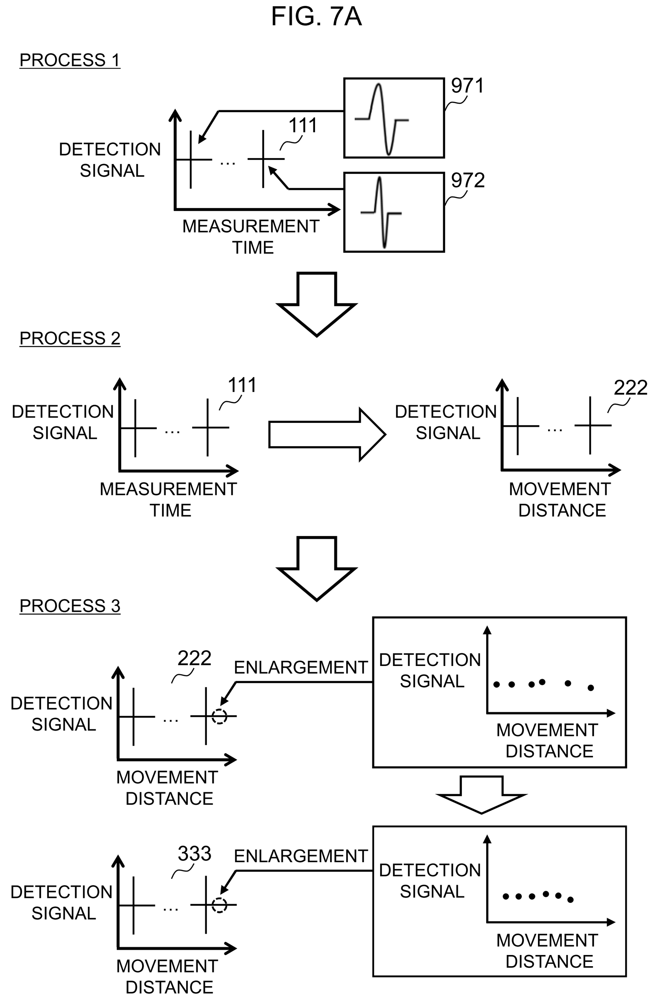

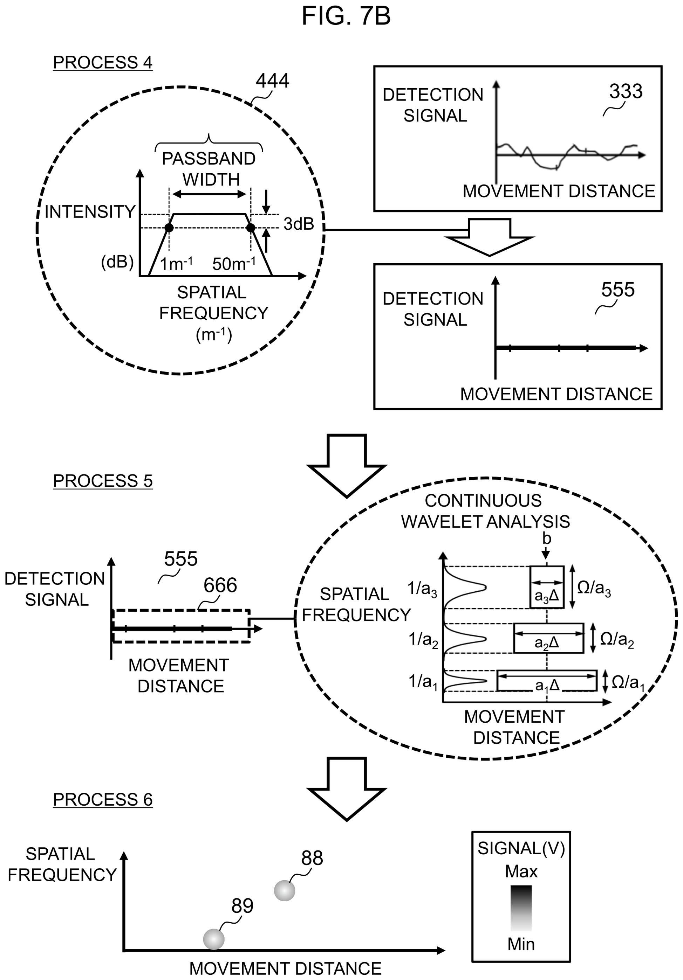

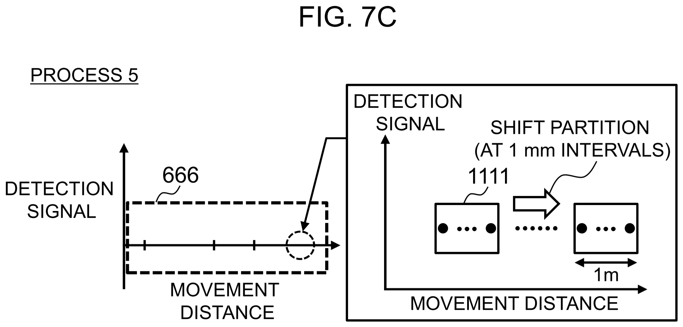

Monitoring of the metal body 200 by the metal body monitoring apparatus 1 will be described with reference to Figures 7A, 7B, and 7C.

A detection signal acquired by the magnetic detection device 2 is time-series data 111 representing the time-series of the detection signal strength (process 1 in Figure 7A). Therefore, a response waveform of the detection signal changes depending on the movement speed of the moving body 100, and thus has a movement speed dependence. As a result, peculiar points where the damages or the structural bodies exist do not always provide a similar signal response, and even when a signal is provided from a similar peculiar point, it is difficult to intuitively capture the response from the signal waveform. In a case where noise enters the detection signal, it is necessary to change the setting of a filter applied to remove noise according to the movement speed, and its application becomes complex. For example, a waveform 971 represents that the response time is relatively long when the movement speed is relatively low, and a waveform 972 represents that the response time is relatively short when the movement speed is relatively high.

Therefore, a detection signal from the magnetic detection device 2 is taken into the processing device 4 in synchronization with an output signal from the distance detection device 3, and the processing device 4 converts the time-series data 111 of the detection signal into data 222 indicating a change in the detection signal strength with respect to a movement distance (process 2 in Figure 7A). The samplings in this converted data 222 are performed at equal intervals when the movement speed of the moving body 100 is constant, but in practice, the movement of the moving body 100 has acceleration and deceleration, and thus the movement speed is not always constant and the samplings are not performed at equal intervals.

Accordingly, the processing device 4 performs interpolation of samplings in the converted data 222 obtained in the process 2 in Figure 7A, and converts the data 222 into data 333 in which the samplings are performed at equal intervals (process 3 in Figure 7A). The sampling intervals in the data 333 may be intervals in accordance with a set value such as an equal interval of, for example, 1 mm, and the set value may be a value in accordance with a resolution required for the monitoring of the metal body as an inspection target.

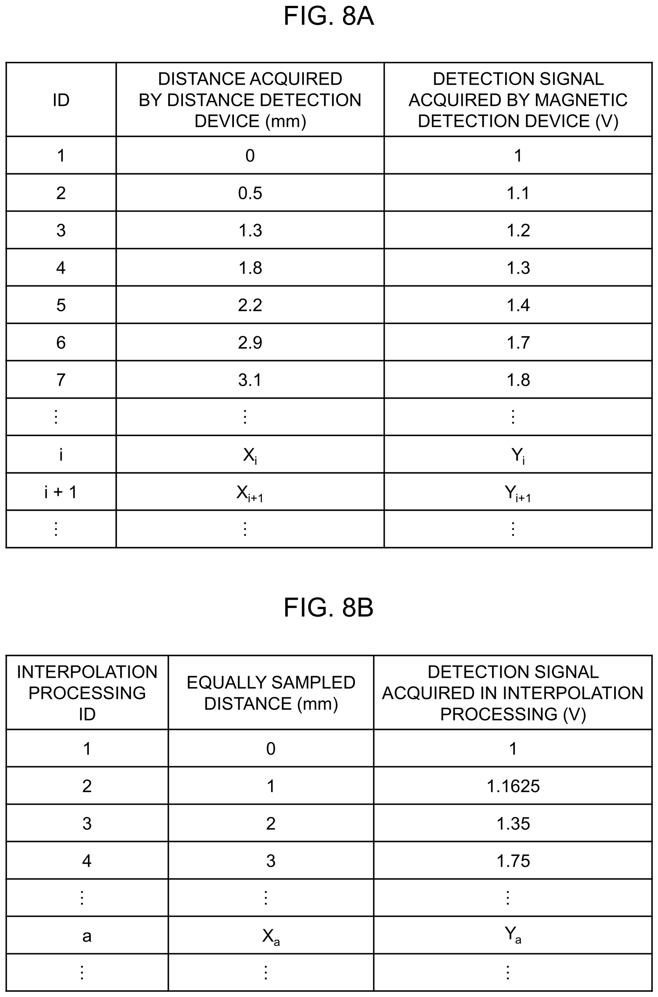

An example of a sampling conversion accompanying interpolation of a detection signal with respect to a movement distance will be described with reference to Figure 8.

The processing device 4 allocates an ID for each movement distance, and stores data including the ID and the movement distance, and the detection signal strength with respect to the movement distance in the process 2 based on signals acquired from the magnetic detection device 2 and the distance detection device 3. As illustrated in Figure 8A, in the stored data, the distance intervals depend on the above-described movement speed of the moving body 100, and thus are not equal intervals.

Therefore, as illustrated in Figure 8B, the processing device 4 calculates the detection signal strength with respect to the distance by the interpolation (for example, linear interpolation) according to desired sampling intervals (for example, sampling intervals indicated by the set value) in Process 3. After the calculation, the processing device 4 stores data of the detection signal strength with respect to the movement distance of equal sampling with the interpolation processing ID. Figure 8B illustrates an example in which samplings are performed at an equal interval of a distance 1 mm. In this case, to calculate the detection signal strength at the distance 1 mm described in Figure 8B from the stored data shown in Figure 8A, the detection signal strength at the distance 1 mm is obtained from the linear interpolation of two data points of the detection signal strengths at the distance 0.5 mm and the distance 1.3 mm interposing the distance 1 mm. In this linear interpolation, approximate values of a function Y with respect to any point X between two points $(X_i, Y_i)$ and $(X_{i+1}, Y_{i+1})$ are expressed as a linear function of X obtained by connecting the two points with a straight line, resulting in $Y_a = Y_i + (Y_{i+1} - Y_i) * (X_a - X_i) / (X_{i+1} - X_i)$. Here, the magnitude relationship is $X_i \le X_a \le X_{i+1}$. For example, to obtain $(X_a (= 1), Y_a)$ as the data at the time of the distance 1 mm shown in Figure 8B, the data $(X_i(= 0.5), Y_i(= 1.1))$ at the distance 0.5 mm shown in Figure 8A and the data $(X_{i+1}(= 1.3), Y_{i+1}(= 1.2))$ at the distance 1.3 mm are used, so that Y is 1.1625 as calculated from the above expression. Similarly, the data at the other distances (for example, a distance 2 mm and the like) are continuously calculated in calculation processing in the processing device 4, and the data of the detection signal strengths equally sampled at an interval for each movement distance of 1 mm is stored in the processing device 4. Although in the description, an interval of 1 mm is exemplified, the distance interval in the interpolation processing can be set to any value by the processing device 4.

The data 333 obtained in Process 3 in Figure 7A is uniform sampling data, so that a spatial filter can be applied to detection signal (Process 4 in Figure 7B). Using this spatial filter makes it possible to extract only signal component required for the extraction of the peculiar point. For example, the signal change relative to the distance larger than the size of the magnetic detection device 2 that performs the signal detection, or the signal change relative to the distance smaller than the size of the reception coil 6 incorporated in the magnetic detection device 2 can be assumed to be electrical noise due to swings of the moving body 100 and disturbance in measurement. Accordingly, the spatial filtering processing by a desired band-pass filter 444 including a high-pass filter and a low-pass filter is performed by the processing device 4. By this process 4, offset variation can be removed from the detection signal, and cleansed data 555 is obtained. A case where the band-pass filter 444 used in the process 4 in Figure 7B removes components of the detection signal in a distance range of 20 mm to 1 m from a cutoff spatial frequency is illustrated as an example. The cutoff spatial frequency can be freely set according to the metal body as an inspection target. In the spatial filtering processing in the process 4, the data 333 indicates a change of the detection signal strength relative to the movement distance, so that the detection signal can be handled without being affected at all by the movement speed of the moving body 100.

The detection signal data 555 subjected to data cleansing in the process 4 is subjected to extraction analysis processing of the spectral response of the detection signal in an inspection section 666 selected by the processing device 4 (process 5 in Figure 7B). The spectral response in the inspection section 666 selected by the process 5 is subjected to the continuous wavelet analysis by the processing device 4. Since the peculiar points of the metal body 200 do not basically occur in a continuous manner with a cyclicity, it can be said that the detection signal is not generated as a cyclic change and are obtained as an unexpected change. In this continuous wavelet analysis, since an area where the detection signal is extracted on the movement distance region is variable, a long analysis area can be processed for a gradual variation component of the detection signal, and a short analysis area can be processed for a minute variation component of the detection signal. This makes it possible to effectively recognize non-stationary or transient variation characteristics of the detection signal generated at the peculiar point. In the continuous wavelet analysis in accordance with the process 5 in Figure 7B illustrated as an example of the description, $\Omega$ represents a spatial frequency resolution specified by a wavelet function to be used, and $\Delta$ represents a distance resolution specified by a wavelet function to be used.

In the continuous wavelet analysis, the processing device 4 performs a continuous wavelet transform T(a, b) by convolution-integrating the detection signal (defined as g(t) for the purpose of description) subjected to data cleansing in the process 4 with the wavelet function ($\psi_{a, b}(t)$). This continuous wavelet transform T(a, b) is expressed by the following [Expression 1].

[Expression 1]

$$T(a,b) = \int_{-\infty}^{\infty} g(t)\psi_{a,b}^{*}(t)\ dt \quad \cdot\ \cdot\ \cdot \quad \text{(Expression 1)}$$

This continuous wavelet function is expressed by the following [Expression 2].

[Expression 2]

$$\psi_{a,b}(t) = \frac{1}{\sqrt{a}}\psi\left(\frac{t-b}{a}\right) \quad \cdot\ \cdot\ \cdot \quad \text{(Expression 2)}$$

The following portion represented by [Expression 3] in [Expression 1] of the continuous wavelet transform is a complex conjugate of the continuous wavelet function, and $\psi$ means the basis of the wavelet function called a mother wavelet.

[Expression 3]

$$\psi_{a,b}^{*}(t) \quad \cdot\ \cdot\ \cdot \quad \text{(Expression 3)}$$

A scale parameter a having information related to the spatial frequency and a shift parameter b having information related to the movement distance are obtained by T(a, b), so that the magnitude of a signal component in each spatial frequency with respect to each position of the movement distance can be found in the detection signal data 555 subjected to data cleansing. Typical examples of the continuous wavelet function include the Mexican hat function, the Meyer function, the Morlet function, and the Symlet function, and any function can be used and may be appropriately used depending on the response of the metal body as an inspection target. For example, when the Mexican hat function is used as the continuous wavelet function, in the Mexican hat function, the mother wavelet $\psi$ is expressed by the following [Expression 4] in the form of the second derivative of the Gaussian function.

[Expression 4]

$$(1 - t^2)e^{-0.5t^2} \quad \cdot \cdot \cdot \quad \text{(Expression 4)}$$

In addition, the wavelet function is as in the following [Expression 5].

[Expression 5]

$$\psi_{a,b}(t) = \frac{1}{\sqrt{a}}\left(1 - \left(\frac{t-b}{a}\right)^2\right)e^{-0.5\left(\frac{t-b}{a}\right)^2} \quad \cdot \cdot \cdot \quad \text{(Expression 5)}$$

In addition to the above function, the continuous wavelet function can use any waveform, and when the shape of the response waveform desired to be obtained from the metal body 200 is known in advance, the wavelet function having a shape similar to the waveform may be created to perform the wavelet transform by the processing device 4. In the continuous wavelet analysis, the two parameters a and b are defined to perform the process. The parameter a is a coefficient for a scaling operation of the wavelet function, and when the value is increased, the wavelet function is stretched in a distance axis direction, whereas when the value is reduced, the wavelet function is contracted in the distance axis direction. The parameter b is a coefficient for shifting the wavelet function in the distance axis direction. In the continuous wavelet analysis (process 5 in Figure 7B) illustrated as an example of the description, an image of the scaling operation of the wavelet function shows a case where the parameter a is changed to a large, medium, or small value ($a_1$, $a_2$, $a_3$) as an example.

The processing device 4 performs a process of displaying a color contour showing a signal strength bar of the detection signal based on the information obtained by the wavelet analysis in the process 5, in which the vertical axis represents a spatial frequency, and the horizontal axis represents a movement distance of the moving body 100 (process 6 in Figure 7B). Since the spatial frequency component of the detection signal differs depending on the type of the peculiar point, the monitoring including the peculiar point information can be performed based on the spectral response (pattern, spatial frequency range in which a signal is generated, and the like) at the peculiar point extracted in the color contour display. This color contour display allows the peculiar point to be visualized by using the spectral response in the wave number space of the detection signal data 555 subjected to data cleansing by the spatial filter (band-pass filter 444), and the effect is exerted also in terms of the usability. For example, since the structural body exists in a relatively large area, the spectral response in which the signal strength is increased in the low spatial frequency range is exhibited (see reference numeral 89). On the other hand, since the damage such as a crack exists locally, the spectral response in the high spatial frequency range is exhibited (see reference numeral 88). When the metal body as an inspection target is an infrastructure facility, joining points such as welding or structural bodies for maintaining the facility exist at specific intervals, whereas abnormality locations of the metal body due to the damage may occur irregularly. Therefore, it is possible to identify (discriminate) between the structural body and the damage, based on the differences in spectral response in the wave number space and the regularity of the response patterns generated in the inspection section.

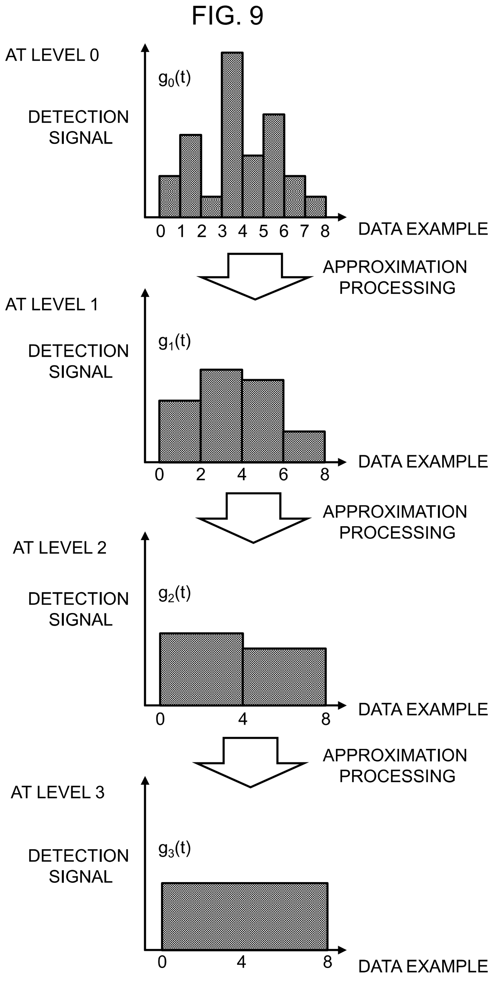

Another process partially different from the processes for the metal body monitoring described with reference to Figures 7A and 7B may be performed. The detection signal from the magnetic detection device 2 acquired in the metal body monitoring apparatus 1 is subjected to data cleansing by the spatial filtering processing by the processing 4, but the observation noise derived from the devices or the use environment may not be able to be removed efficiently. In this case, it is necessary to take an appropriate measure against noise included in the detection signal after the process 4. As this measure, before performing the continuous wavelet analysis performed in the process 5 in Figure 7B, the processing device 4 isolates the detection signal in the form of a linear combination of different resolution components by the discrete wavelet transform (Figure 9).

In this discrete wavelet transform, the binary split process is performed in which the scale parameter a is $2^j$ and the shift parameter b is $2^j k$ in the continuous wavelet transform. In the binary split process, the discrete wavelet function is expressed by the following [Expression 6].

[Expression 6]

$$\psi_{j,k}(t) = 2^{-j/2}\psi\left(2^{-j}t - k\right) \quad \cdot \cdot \cdot \quad \text{(Expression 6)}$$

The symbol j shown in the discrete wavelet function is called a level, and indicates two-fold enlargements or reductions. The symbols j and k are integers. The detection signal (defined as g(t) for the purpose of description) from the magnetic detection device 2, which is subjected to data cleansing by the spatial filtering processing by the processing 4, can be subjected to a series expansion based on the discrete wavelet function, and can be isolated by increasing a value of j. The series expansion means a process of isolating a signal, and the detection signal is expressed by the following [Expression 7].

[Expression 7]

$$\sum_j w_k^{(j)} \psi_{j,k}(t) \quad \cdot \cdot \cdot \quad \text{(Expression 7)}$$

The following [Expression 8] in the series expansion ([Expression 7]) is a discrete wavelet coefficient.
[Expression 8]

$$w_k^{(j)} \quad \cdot \cdot \cdot \quad \text{(Expression 8)}$$

The discrete wavelet transform S(j, k) is expressed by the following [Expression 9] in a similar form to the continuous wavelet processing.
[Expression 9]

$$S(j, k) = \int_{-\infty}^{\infty} g(t) \psi_{j,k}^{*}(t) \, dt \quad \cdot \cdot \cdot \quad \text{(Expression 9)}$$

The series expansion corresponding to processing approximated by a linear combination of the wavelet function, and the approximation accuracy of the detection signal g(t) by this series expansion depends on the level, and the approximation becomes rough as a value of the level increases. That is, an approximate function of the level j of the signal g(t) is as in the following [Expression 10] as a series. When the level is 0, the detection signal g(t) is shown at the highest accuracy.
[Expression 10]

$$g_j(t) = \sum_j w_k^{(j)} \psi_{j,k}(t) \quad \cdot \cdot \cdot \quad \text{(Expression 10)}$$

The detection signal g(t) is a continuous signal, and N sampling values $(a_1 \dots a_N)$ are obtained at a constant interval (for example, an interval of a movement distance 1 mm). Here, to perform the discrete wavelet processing, the number N of pieces of data is equal to a power of two, resulting in $N = 2^n$. The approximation of the detection signal g(t) is hierarchically performed, and the flow will be described with reference to Figure 9. Figure 9 illustrates an example of the hierarchical approximation of the detection signal g(t) when the number N of pieces of data is 8 $(=2^3)$ at the level 0, for the purpose of description. This hierarchical approximation is processing of replacing, every two consecutive data values, eight pieces of data $(a_1 \dots a_8)$ with an average value of the data values. In a first approximation, the eight pieces of data $(a_1 \dots a_8)$ are replaced with four pieces of data $((a_1 + a_2) / 2, (a_3 + a_4) / 2, (as + a_6) / 2, \text{and } (a_7 + a_8) / 2)$. The hierarchical approximation means that the similar processing of replacing, every two consecutive data values, the replaced four pieces of data with an average value of the data values is subsequently performed.

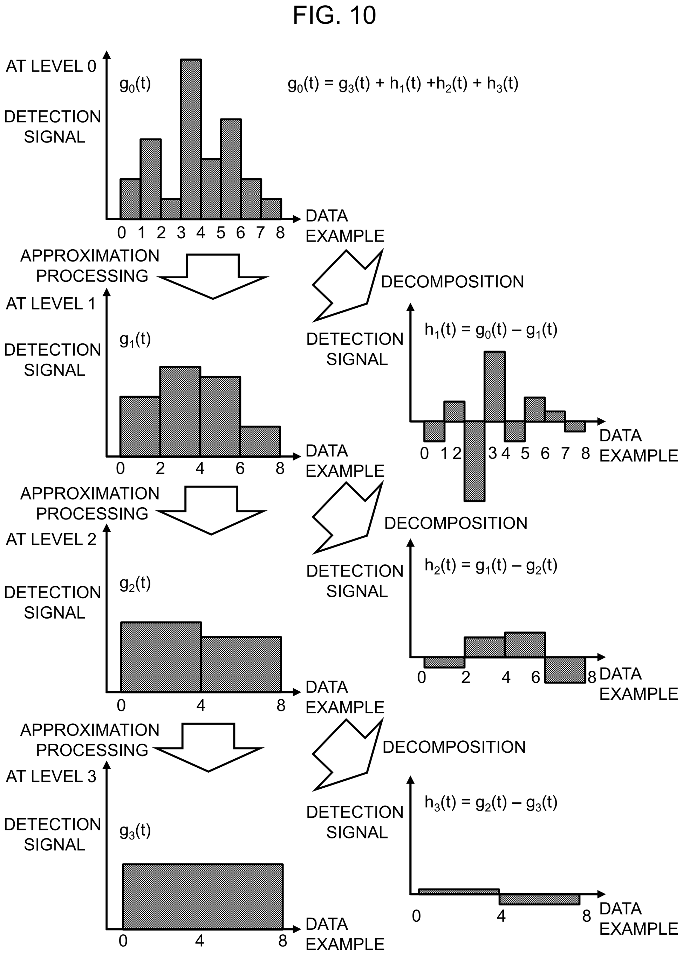

When this hierarchical approximation is performed, the detection signal g(t) is hierarchically decomposed by calculating the data h(t) obtained by calculating a difference between data before the approximation and data after the approximation. The hierarchical decomposition will be described with reference to Figure 10, based on the description example illustrated in Figure 9. The detection signal $g_0(t)$ which is the data at the level 0 can obtain the detection signal $h_1(t)$ from the detection signal $g_1(t)$ which is the approximate data. Subsequently, the detection signal $h_2(t)$ can be decomposed from the detection signal $g_1(t)$ which is the data at the level 1. Similarly, at the level 2, the detection signal g0(t) is decomposed into the detection signals $g_3(t)$ and $h_3(t)$. Here, the detection signal $g_0(t)$ which is the original data can be reproduced by the sum of $g_3(t)$, $h_1(t)$, $h_2(t)$, and $h_3(t)$. Therefore, the discrete wavelet coefficient of the detection signal g(t) is calculated under the condition for each of values at the levels in a desired range, and the noise is removed by smoothening the calculated discrete wavelet coefficient with a certain threshold T. The thresholding performed by this noise removal includes hard thresholding and soft thresholding. The hard thresholding is performed with a wavelet coefficient (the following [Expression 11]).
[Expression 11]

$$w_k^{(j)} = \begin{cases} 0, & \mid w_k^{(j)} \mid < T \\ w_k^{(j)}, & \mid w_k^{(j)} \mid \geq T \end{cases} \quad \cdot \cdot \cdot \quad \text{(Expression 11)}$$

When the hard thresholding is performed, a determination is made whether the discrete wavelet coefficient is maintained or removed. On the other hand, in the soft thresholding, the discrete wavelet coefficient is considered to include both of signal and noise, and thus the noise portions are removed from all of the discrete wavelet coefficients to isolate the signal. The soft thresholding is performed in the form of a wavelet coefficient (the following [Expression 12]).
[Expression 12]

$$w_k^{(j)} = \begin{cases} 0, & \mid w_k^{(j)} \mid < T \\ sign\left(w_k^{(j)}\right)\left(\mid w_k^{(j)} \& \mid - T\right), & \mid w_k^{(j)} \mid \geq T \end{cases} \quad \cdot \cdot \cdot \quad \text{(Expression 12)}$$

Here, all of the discrete wavelet coefficients for the thresholds of less than T are set to zero, and all of the discrete wavelet coefficients having the magnitude equal to or larger than the threshold are reduced by T toward zero. The preferred thresholding can be selected according to the detection signal $g_j(t)$. The universal threshold T is used for the thresholding, and the threshold at the level j is as in the following [Expression 13].
[Expression 13]

$$T_j = \sigma_j \sqrt{2 ln\, n_j} \quad \cdot \cdot \cdot \quad \text{(Expression 13)}$$

Here, $n_j$ represents a length (the number) of a discrete wavelet coefficient at the level j, and $\sigma_j$ represents a standard deviation of the noise included in the detection signal $g_j(t)$ as a target. Since the value of $\sigma_j$ is actually unknown, a value obtained based on the standard deviation of a Gaussian distribution is used as the estimated value of the standard deviation by dividing a median value of the absolute deviation of the discrete wavelet coefficient in the minimum scale by 0.6745. In addition to the above means using the universal threshold, the thresholding includes a mini-max method, a SURE method, a HYBRID method, a cross-validation method, a Lorenz method, and Bayesian approach, and they may be used. As described above, the discrete wavelet coefficient obtained by the discrete wavelet transform is subject to the thresholding at each level j according to the threshold, and the detection signal $g_j(t)$ is reconstructed by the discrete wavelet inverse transform. This reconstructed detection signal $g_j(t)$ is subjected to the continuous wavelet transform in the process 5 illustrated in Figure 7B, and the spectral response in the wave number space by the color contour display illustrated in the process 6 is output from the continuous wavelet transform data.

In addition, in the metal body monitoring, the process 5 may be the process 5 illustrated in Figure 7C. This can be applied when the detection signal always indicates a cyclic variation, and a peculiar point is detected during the variation. Instead of the continuous wavelet analysis performed in the process 5 in Figure 7B, this process is performed by the processing device 4 by shifting the short-time Fourier transform analysis of the predetermined section 1111 set to, for example, 1 m by intervals of 1 mm in a region where the detection signal exists in the section to be inspected, and the color contour display processing for the spectral response is performed based on the obtained result in the similar manner as the process 6 in Figure 7B. The continuous wavelet analysis is analysis means exhibiting both of movement distance resolution and spatial frequency resolution that are more excellent than the short-time Fourier transform, but when the metal body having a surface shape formed by twisting wires called strands like wire ropes, for example, is monitored, the short-time Fourier transform may be more suitable than the wavelet analysis in a case where the cyclic variation that reflects the strands occurs in the detection signal and the analysis accompanying the cyclic variation.

<Circuit Configuration of First Embodiment>

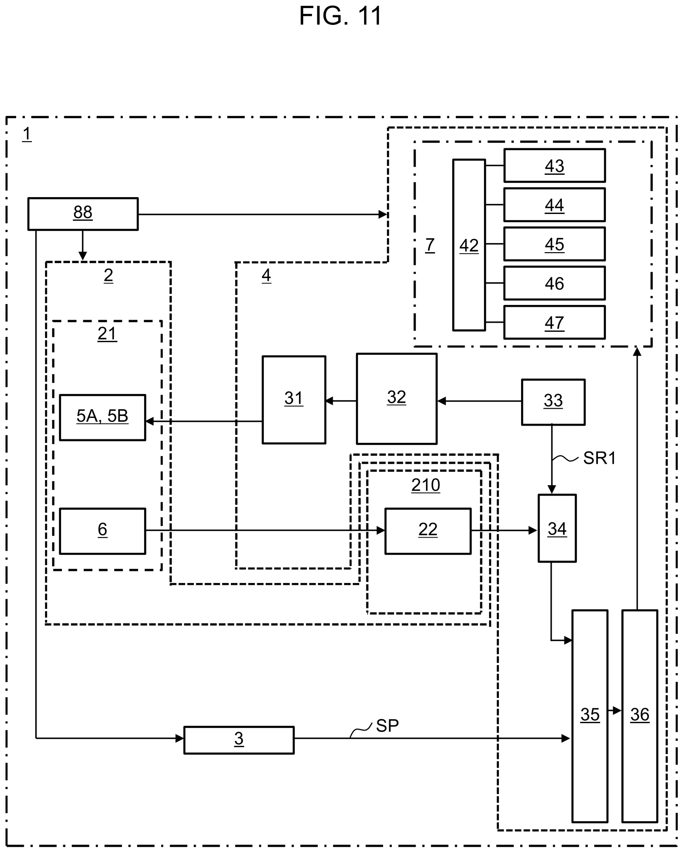

Figure 11 is a block diagram illustrating an overall configuration of the metal body monitoring apparatus 1 according to the present embodiment.

As described above, the metal body monitoring apparatus 1 has the magnetic detection device 2, the distance detection device 3, the processing device 4, and the power supply 88. The magnetic detection device 2 has the magnetic sensor unit 21 and the preamplifier unit 210, and the magnetic sensor unit 21 has the oscillation coil 5A and the oscillation coil 5B, and the reception coil 6. The preamplifier unit 210 has the amplification filter circuit 22, and the amplification filter circuit 22 is connected to the magnetic sensor unit 21.

In addition, the processing device 4 includes an amplifier unit 31, a digital-analog conversion unit 32, an oscillation unit 33, a detection unit 34, an analog-digital conversion unit 35, a memory unit 36, and an evaluation device 7. The oscillation unit 33 outputs a sinusoidal digital oscillation signal with a predetermined oscillation frequency f. Considering the impedance of the oscillation coil 5A and the oscillation coil 5B, the oscillation frequency f is selected to a value that can output a sufficient excitation magnetic field and ensure sufficient sensitivity of the reception coil 6. Also, when selecting the oscillation frequency f, it is preferable to fully consider effects on the metal body monitoring inspection. In particular, a selected frequency range is preferably selected from a range of 10 kHz to 100 kHz so as to be away from 1/f noise, sufficiently separate from the line noise (50 Hz or 60 Hz) and its high harmonic wave, and obtain a sufficient magnetic flux flow even when affecting a skin effect of the metal body as an inspection target.

In Figure 11, the digital-analog conversion unit 32 converts a digital oscillation signal output by the oscillation unit 33 into an analog AC voltage. The amplifier unit 31 amplifies the AC voltage and applies the AC voltage to the oscillation coil 5A and the oscillation coil 5B in the magnetic sensor unit 21. As a result, alternating magnetic fields with reversed phases are generated from the oscillation coil 5A and the oscillation coil 5B. Since the magnetic detection device 2 mounted on the moving body 100 is separated from the traveling surface 200a (see Figure 1) so as not to interfere with the movement of the moving body 100, an alternating magnetic field of strength required to sufficiently excite the traveling surface 200a is output from the oscillation coil.

The amplification filter circuit 22 in the magnetic detection device 2 amplifies and performs filtering processing on the signal from the reception coil 6, and sends the result to the detection unit 34 in the processing device 4. This "filtering processing" is low-pass filtering processing that removes frequency components higher than an upper limit frequency of the oscillation frequency f in a setting variable range, or high-pass filtering processing that removes frequency components lower than a lower limit frequency of the oscillation frequency f in the setting variable range, considering a case where a degree of freedom is provided for setting of the oscillation frequency f. When the oscillation frequency f to be used is determined, the filtering processing may be band-pass filtering processing that passes only a bandwidth including a frequency range satisfying the response speed at the high movement speed of the moving body 100 centered on the oscillation frequency f. Further, the detection unit 34 uses a reference signal SR1 supplied from the oscillation unit 33 to generate signals X, Y, R, and θ (the details of these signals will be described below) based on the signal supplied from the amplification filter circuit 22, and supplies the generated signals to the analog-digital conversion unit 35. The analog-digital conversion unit 35 converts each analog signal received from the detection unit 34 into a digital signal.

In the present embodiment, the signal from the distance detection device 3 is supplied to the processing device 4. The distance detection device 3 (see Figure 1) detects a rotation angle of a wheel 300 of the moving body 100 via the rotation drive mechanism 500 connected to the axle 400, and outputs a pulse signal SP according to the rotation of a predetermined angle. Therefore, the analog-digital conversion unit 35 converts the pulse signal SP into a digital signal and stores it in the memory unit 36. The digital signal output from the analog-digital conversion unit 35 is stored as data in the memory unit 36, and the movement distance information of the moving body 100 is supplied to the evaluation device 7. In the evaluation device 7, the movement distance of the moving body 100 is calculated by counting the pulse signal SP.

Next, the evaluation device 7 will be described. The evaluation device 7 is hardware including a central processing unit (CPU), a random access memory (RAM), a read only memory (ROM), a hard disk drive (HDD), and the like as a general computer, and the HDD stores an operating system (OS), application programs, various data, and the like. The OS and application programs are developed in the RAM and executed by the CPU.

The evaluation device 7 includes a control unit 42, a data processing unit 43, an output processing unit 44, an operation input unit 45, a display unit 46, and a storage unit 47. The evaluation device 7 executes an inspection processing program that specifies the peculiar point 202 of the metal body 200 (see Figure 6) based on the metal body monitoring data received from the magnetic detection device 2, the detection unit 34, the analog-digital conversion unit 35, and the memory unit 36. In the present embodiment, the "metal monitoring data" corresponds to data at all stages from the reception coil 6 of the magnetic detection device 2 to the evaluation device 7.

The control unit 42 is, for example, a CPU (an example of a processor), and controls reading of inspection data from the memory unit 36, arithmetic processing, and the like. The data processing unit 43 performs inspection processing based on the inspection data (details will be described below). The display unit 46 is a liquid crystal display (LCD), a cathode ray tube (CRT) display, or the like for displaying inspection results and the like. The output processing unit 44 causes the display unit 46 to display the results of metal body monitoring and the like. In this case, the output processing unit 44 performs processing for displaying in a visually easy-to-understand display format by appropriately using a graph or table format. The operation input unit 45 is information input means such as a keyboard, a mouse and a touch panel. The storage unit 47 stores data such as the inspection results processed by the data processing unit 43. The data stored in the memory unit 36 are also transferred to the storage unit 47. The data processing unit 43 and the output processing unit 44 are implemented by loading programs and data stored in the storage unit 47 into the control unit 42 and executing arithmetic processing.

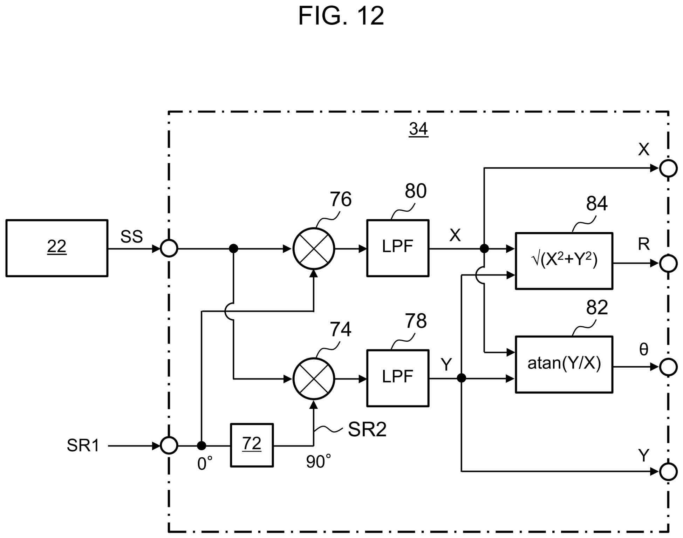

Figure 12 is a block diagram of the detection unit 34. A received signal SS from the amplification filter circuit 22 is supplied to phase comparators 74 and 76. Also, a reference signal SR1 supplied from the oscillation unit 33 (see Figure 8) is delayed by a delay circuit 72 by the time corresponding to the 90° phase of the oscillation frequency f. The delayed reference signal SR1 is called a reference signal SR2. The reference signal SR1 is supplied to the phase comparator 76 and the reference signal SR2 is supplied to the phase comparator 74. The phase comparator 76 extracts a component synchronized with the reference signal SR1 in the received signal SS. The extracted signal is filtered by a low pass filter (LPF) 80, and the LPF 80 outputs a processing result as a cosine signal X.

Also, the phase comparator 74 extracts a component synchronized with the reference signal SR2 in the received signal SS. The extracted signal is filtered by an LPF 78, and the LPF 78 outputs the result as a sine signal Y. A calculator 84 calculates $\sqrt{(X^2 + Y^2)}$ and outputs the result as an amplitude signal R. Further, a calculator 82 calculates an arctangent of (Y / X), that is, atan (Y / X), and outputs the result as a phase difference signal $\theta$.

The detection unit 34 then supplies the above-described signals X, Y, R, and $\theta$ to the memory unit 36 via the analog-digital conversion unit 35 (see Figure 11). Although in the illustrated example, the detection unit 34 outputs all of the signals X, Y, R, and $\theta$, the amplitude signal R and the phase difference signal $\theta$ may be calculated by the data processing unit 43 (see Figure 11) based on the cosine signal X and the sine signal Y instead of being calculated by the detection unit 34.

Here, the reason why the detection unit 34 detects the sine signal Y in addition to the cosine signal X will be explained. Also in any one of the cosine signal X and the sine signal Y, the information related to the metal body monitoring (change in amplitude in the detection signal) can be obtained. On the other hand, when only the cosine signal X is used, it is necessary to adjust to set the phase of the reference signal so that the amplitude of the cosine signal X is maximized during the inspection. In this phase setting, it is necessary to adjust the set value every time, for example, when the metal body as a target is changed, when a distance between the metal body and the magnetic detection device changes, when the excitation frequency of the oscillation coil in the magnetic detection device changes, and the like, as the inspection conditions. Since the phase difference can be calculated by simultaneously detecting the cosine signal X and the sine signal Y, the inspection can be performed without adjusting the phase. Also, not only a change in amplitude in the detection signal but also a change in phase difference can be obtained simultaneously, and more detailed metal body monitoring information can be obtained. Further, since the value of the amplitude signal R that can be calculated in a calculator 84 (or the evaluation device 7) is in principle constant even when the phase difference signal $\theta$ changes, there is an advantage where the process of optimizing the phase of the reference signal can be omitted.

[Operations of First Embodiment]

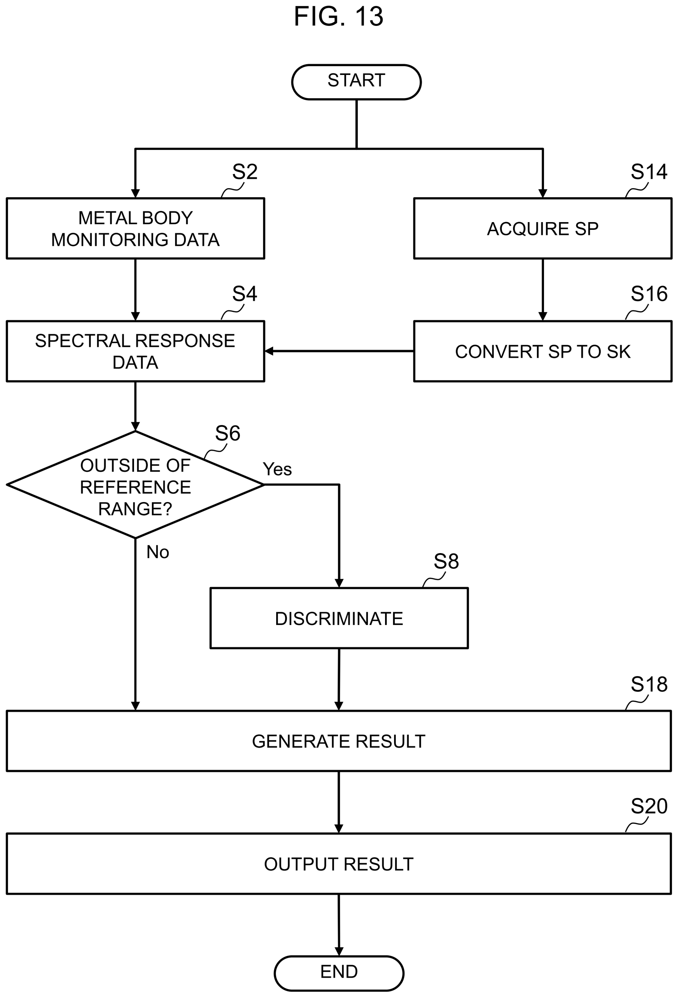

Figure 13 is a flowchart of metal body monitoring data processing executed by the data processing unit 43 of the evaluation device 7.

This process is executed at each predetermined control cycle. In FIG. 10, processes of steps S2 and S14 are executed in parallel. First, the evaluation device 7 acquires the metal body monitoring data from the storage unit 47 in step S2, and acquires the distance pulse signal SP from the storage unit 47 in step S14. After step S14 is completed, the evaluation device 7 converts the distance pulse signal SP into distance data SK in step S16. That is, the evaluation device 7 calculates the distance data SK based on the number of times the distance pulse signal SP is detected by the distance detection device until the movement of the moving body is stopped. Here, the distance data SK indicates a distance from a predetermined reference position (movement start position of the moving body), and the distance data SK may be an example of position data.

After step S2 is completed, the evaluation device 7 acquires spectral response data in the wave number spaced by using the distance data SK in step S4. After step S4 is completed, the evaluation device 7 determines whether the spectral response data is out of a predetermined reference range, that is, a range of the signal strength with a set lower limit value. Here, the "spectral response data" used for the determination is, for example, the amplitude signal R illustrated in FIG. 12. When there is the peculiar point 202 (see Figure 6), the amplitude signal R is obviously larger. Therefore, in step S6, the evaluation device 7 compares the amplitude signal R with a predetermined threshold $R_{th1}$. When "$R \neq R_{th1}$", it may be determined "Yes", that is, there is a possibility that there is a peculiar point. On the other hand, when "$R = R_{th1}$" (which may include that the difference is equal to or less than a predetermined difference), it may be determined as "No", that is, there is no peculiar point.

When "No" is determined here, the process proceeds to step S18. The contents of the process will be described below. On the other hand, when it is determined as "Yes" in step S6, the process proceeds to step S8. In step S8, structural bodies and damages are discriminated based on the spatial frequency region in which the signal strengths of the signals X, Y, R, $\theta$ and the like illustrated in Figure 12 increase.

When the processes of steps S2 to S16 described above are completed, the process proceeds to step S18 to generate a metal body monitoring result. Here, the "metal body monitoring result" may include the correspondence between the peculiar points (structural bodies and damages) and the distance data SK when step S8 is performed (when step S8 is not performed, the "metal body monitoring result" may include a result of no peculiar points). Next, when the process proceeds to step S20, the data processing unit 43 outputs the metal body monitoring result to the display unit 46 and the like, and the process of this routine ends.

[Effects of First Embodiment]

As described above, according to the metal body monitoring apparatus 1 of the present embodiment, the magnetic detection device 2 includes the lower housing 20 and the upper housing 26. The lower housing 20 accommodates the magnetic sensor unit 21 and is made of a non-magnetic material. The upper housing 26 accommodates the preamplifier unit 210 and is fixed to the upper surface of the lower housing 20. The connector 28 to be connected to the connection cable 64 is attached to one side face of the upper housing 26. The upper housing 26 is made of metal. As a result, the state of the metal body 200 can be stably detected.

Further, the magnetic detection device 2 excites the traveling surface 200a of the metal body 200 with an alternating magnetic field and detects the peculiar point 202 on the traveling surface based on the turbulence of the magnetic flux flow generated in the traveling surface. As a result, the state of the metal body can be accurately detected.

The metal body monitoring apparatus 1 further includes the output processing unit 44. The output processing unit 44 expresses the type and existing position of the detected peculiar point 202 as an image and displays the image on the display unit 46. This allows the user to visually recognize the state of the metal body 200.

Also, the evaluation device 7 can identify the peculiar point 202 based on the discrimination result of the peculiar point 202 and manage the structural bodies and damages as the information of the peculiar points in the metal body 200. Further, the processing device 4 detects a position of a peculiar point based on the distance pulse signal SP from the distance detection device 3, and displays the result on the display unit 46.

[Second Embodiment]

Next, a second embodiment of the invention will be described. In the following description, parts corresponding to those in Figures 1 to 12 are denoted by the same reference numerals, and description thereof may be omitted. In addition, hereinafter, differences from the first embodiment will be mainly described, and descriptions of common points with the first embodiment will be omitted or simplified.

<Configuration of Second Embodiment>

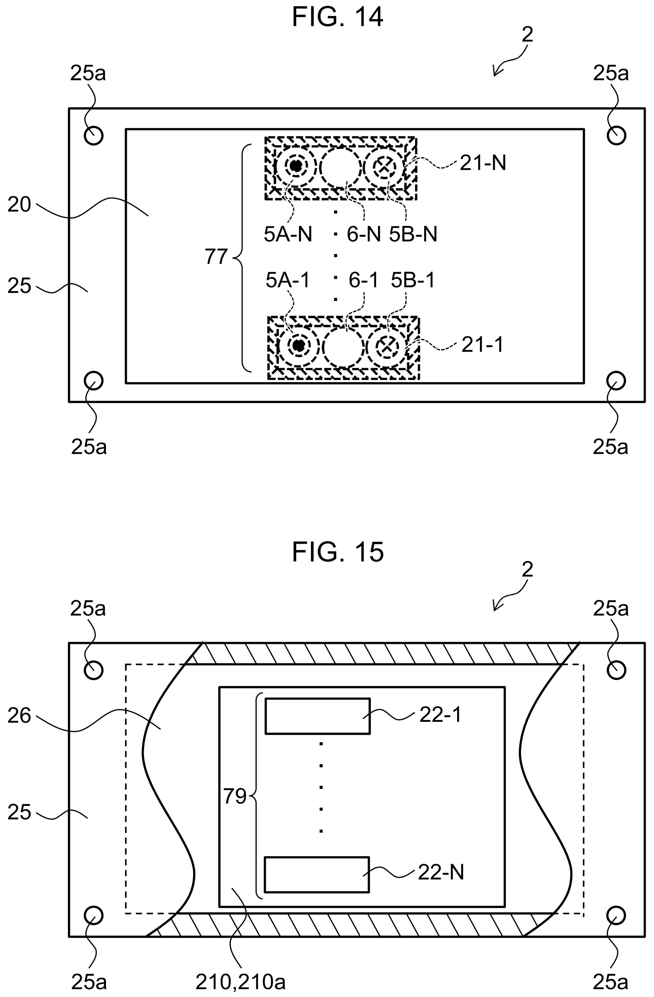

In a configuration of the present embodiment, a plurality of magnetic sensor units are used as illustrated in Figure 14 based on the configuration of Figure 3 described in the first embodiment described above. Figure 14 is a bottom view of a magnetic detection device 2 incorporating the plurality of magnetic sensor units. As illustrated in Figure 14, a magnetic sensor unit group 77 has N (in the present embodiment, N is an integer equal to two or more as described above) magnetic sensor units 21-1 to 21-N arranged in a row along a width direction of the lower housing 20, that is, along the width direction of the metal body 200 (see Figure 1).

Further, a magnetic sensor unit 21-k (k is any integer from 1 to N) has an oscillation coil 5A-k, an oscillation coil 5B-k, and a reception coil 6-k. Each of these coils is configured by winding a coated copper wire.

The oscillation coil 5A-k, the reception coil 6-k, and the oscillation coil 5B-k are arranged along the width direction (direction perpendicular to the moving direction) of the metal body 200 (see Figure 1), and the reception coil 6-k is placed with an equal distance from each of the oscillation coil 5A-k and the oscillation coil 5B-k. Alternating currents having all different frequency values are supplied to the oscillation coils 5A-k and 5B-k from the processing device 4 (see Figure 11) via the connection cable 60. As a result, alternating magnetic fields having different frequency values are generated respectively from the oscillation coils 5A-k and 5B-k to excite the metal body 200, and the magnetic flux generated from the excited metal body 200 generates an induced voltage in each reception coil 6-k.

Figure 15 is a partially cutaway plan view of the magnetic detection device 2 in the second embodiment. Similar to Figure 3, Figure 14 is an explanatory diagram in which a center portion of the flange 25 is cut away to expose the inside of the upper housing 26. The configuration such as the housing structure and the material to be used of the magnetic sensor unit is similar to that of the first embodiment.

In Figure 15, the preamplifier unit 210 includes a printed circuit board 210a on which an amplification filter unit group 79 is mounted. The amplification filter circuit group 79 has the same number (N) of amplification filter circuits 22-1 to 22-N as the number of the magnetic sensor units 21 described above. The magnetic sensor units 21 may be in one-to-one correspondence to the amplification filter circuit 22.

The amplification filter unit 22-k (k is any integer from 1 to N) amplifies, and performs filtering processing on, the induced voltage generated in the reception coil 6-k, and transmits the amplified and filtered result to the processing device 4 via the connection cable 60 (see Figure 1). The processing device 4 performs analyzing processing on the received signal, and detects a magnetic signal generated from the metal body 200.

<Circuit Configuration of Second Embodiment>

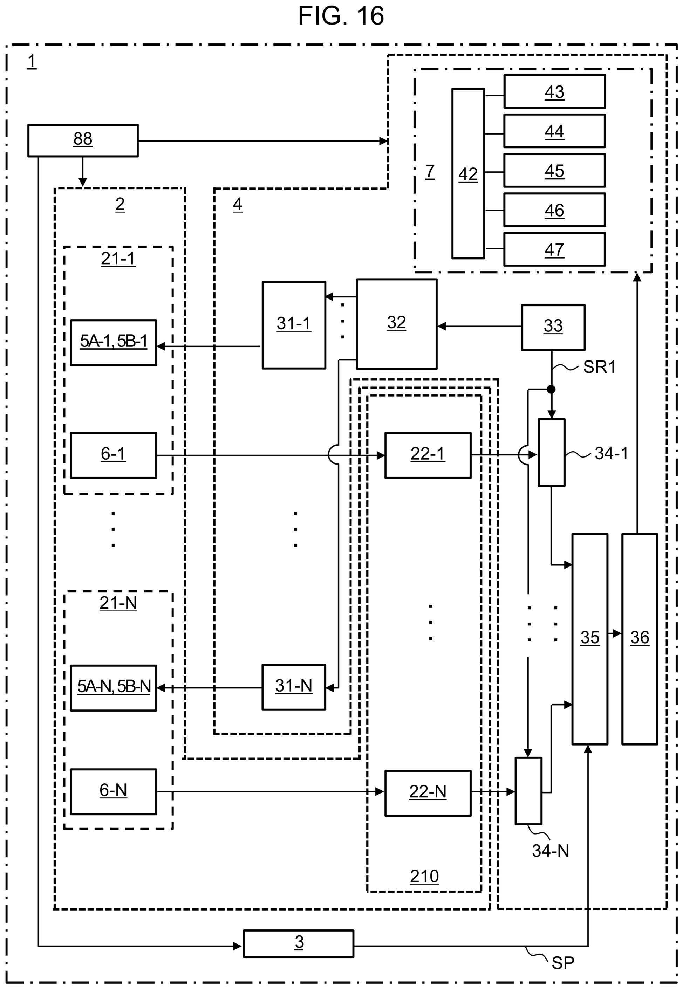

Figure 16 is a block diagram illustrating an overall configuration of the metal body monitoring apparatus 1 according to the present embodiment.

In the metal body monitoring apparatus 1 of the present embodiment, the magnetic detection device 2 has the magnetic sensor units 21-1 to 21-N and the preamplifier unit 210, and the magnetic sensor unit 21-k has the oscillation coils 5A-k and 5B-k and the reception coil 6-k. The preamplifier unit 210 has the amplification filter units 22-1 to 22-N, and the amplification filter unit 22-k is connected to the magnetic sensor unit 21-k.

In addition, the processing device 4 includes amplifier units 31-1 to 31-N, a digital-analog conversion unit 32 of N systems, an oscillation unit 33, detection units 34-1 to 34-N, an analog-digital conversion unit 35, a memory unit 36, and an evaluation device 7 (in the present embodiment, N is an integer equal to two or more, but may be one). In Figure 16, the digital-analog conversion unit 32 converts a digital oscillation signal output by the oscillation unit 33 into an analog AC voltage. The amplifier unit 31-k (k is any integer from 1 to N) amplifies the AC voltage and applies the AC voltage to the oscillation coils 5A-k and 5B-k in the magnetic sensor unit 21-k via the resonance filter unit 60-k. As a result, alternating magnetic fields with reversed phases are generated from the oscillation coils 5A-k and 5B-k.

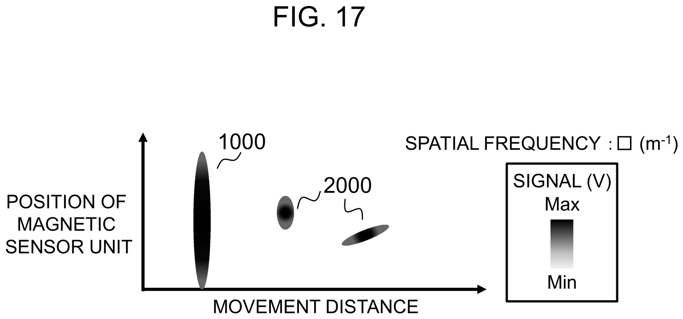

In the present embodiment, the spectral responses in the wave number space derived in the processes illustrated in Figures 7A, 7B, 7C, 8A, 8B, 9, and 10 are obtained in the overall area of the metal body 200 including a plurality of magnetic sensor units 21 to be used, by using the signal of the magnetic detection device 2 and the signal of the distance detection device. Accordingly, when peculiar points are extracted, the response change of the signal strength in the specified spatial frequency can be seen in the measurement area of the metal body 200, and, for example, an occurrence distribution of damage can be grasped, so that more detailed metal body monitoring can be performed. According to the present embodiment, the positions of the peculiar points existing in the metal body and the signal strength distribution at the positions can be represented by contour lines as illustrated in Figure 17 by using signal component in the specified spatial frequency obtained by the plurality of magnetic sensor units 21 to be used. Figure 17 illustrates a color contour display with a signal strength bar of the detection signal component in the specified spatial frequency, in which the vertical axis represents a position information of the magnetic sensor units 21 to be used, and the horizontal axis represents a movement distance of the moving body 100. Among the peculiar points, the structural body is artificial, and thus, exists in an overall area measured by each magnetic sensor unit at its existing position. Therefore, in the existing position of the structural body as indicated by reference numeral 1000 in Figure 17, the signal strength is uniform at each measurement position of the magnetic sensor unit 21. On the other hand, the existing position of the damage naturally occurs unlike the structural body, and thus, the signal strength is not uniform unlike the structural body. That is, the uneven distribution is represented which indicates that the signal strength obtained at each measurement position of the magnetic sensor unit 21 reflecting the occurrence area of the damage and as indicated by reference numeral 2000 of Figure 17 indicates the deviation. Any value can be set and input for the specified spatial frequency, and the contour line expression of the position of the peculiar point existing in the metal body and the signal strength distribution at the position is output and displayed on the display unit 46 by the evaluation device 7. The output and display of such contour line expression may be an example of the display of the monitoring information.

[Modification Example]

The invention is not limited to the embodiments described above, and various modifications are possible. The above-described embodiments are illustrated for easy understanding of the invention, and are not necessarily limited to those having all the described configurations. Also, part of the configuration of one embodiment can be replaced with the configuration of another embodiment, and the configuration of another embodiment can be added to the configuration of one embodiment. Further, it is possible to delete part of the configuration of each embodiment, or to add and/or replace other configurations. Also, the control lines and information lines illustrated in the drawings are those considered to be necessary for explanation, and do not necessarily show all the control lines and information lines necessary on the product. In practice, it may be considered that almost all configurations are interconnected. Possible modifications to the above-described embodiments are, for example, the following.

(1) Since the hardware of the evaluation device 7 in each of the above-described embodiments can be implemented by a general computer, programs for executing the signal processing illustrated in Figures 7A, 7B, 7C, 8A, 8B, 9, and 10, and the processing according to the flowchart illustrated in Figure 13 may be installed in the computer from a program source such as a portable storage medium or server.

(2) In the above-described embodiment, the functions illustrated in Figures 11, 12, and 16 or the processes described based on Figures 7A, 7B, 7C, 8A, 8B, 9, 10, and 13 are explained as the functions or processes implemented by executing the programs by the processor in the above-described embodiments, but some or all of them may be replaced with hardware functions and processes using an application specific integrated circuit (ASIC) or a field programmable gate array (FPGA).

(3) In each of the above-described embodiments, the metal body monitoring apparatus 1 may be mounted on moving bodies in general, including manual moving bodies such as a handcart, and self-propelled moving bodies with a motor, or a diesel engine.

(4) The distance detection device 3 can be also applied to the self-propelled moving bodies with a speed generator by using signals in addition to the distance pulse signal SP using an encoder explained in the embodiments. Substitute means may be applied which estimates the movement distance based on the acceleration information obtained from an acceleration sensor, and measures the movement distance by using a laser doppler.

The above description can be summarized as follows, for example. The following summary may include descriptions of supplements and modifications of the above description.

A metal body monitoring apparatus (1) has a magnetic detection device (2), a distance detection device (3), and a processing device (4) connected to the magnetic detection device and the distance detection device. The magnetic detection device has a magnetic sensor unit (21), and the magnetic sensor unit is provided on a moving body (100) that relatively moves over a metal body (20), excites the metal body with an alternating magnetic field, and detects a generated leakage magnetic field in a non-contact manner. The distance detection device is provided on the moving body and detects a movement distance relative to the metal body of the moving body. The processing device converts first data (111) representing the time-series of the detection signal strength from the magnetic detection device into second data (222) representing a relationship between the movement distance and the detection signal strength based on the movement distance at each time point detected by the distance detection device. The processing device extracts a spectral response in a wave number space specified from the second data, and outputs monitoring information which is information based on the extracted spectral response. Peculiar points of the metal body can be discriminated based on the monitoring information. Since offset drifts caused by swings of the moving body which are noise factors have different distance ranges, it becomes easy to remove the offset drifts without depending on the speed. The monitoring information may include information (for example, the information indicating the movement distance, and what type of peculiar point exists) indicating the discrimination result of the peculiar points of the metal body. The peculiar points may be broadly classified into damaged points and structural body points, and in the structural body points, it may be identified (estimated) that the peculiar point is classified into what type of structural body point among a plurality of types of points classified into the structural body points.

The output of the monitoring information may be the display of the monitoring information (for example, display on the display unit). The monitoring information may be information indicating a correspondence between the spatial frequency and the movement distance of the moving body. Since the spatial frequency component of the detection signal varies depending on the type of peculiar point, the peculiar points can be discriminated from such monitoring information. The correspondence between the spatial frequency and the movement distance of the moving body may be a color contour of an orthogonal coordinate system of a first axis corresponding to the spatial frequency and a second axis corresponding to the movement distance of the moving body, and a color indicator in accordance with the detection signal strength may be arranged in the orthogonal coordinate system. Thereby, high visibility is expected.

The processing device may perform the spatial filtering processing in accordance with the size required for monitoring the metal body, on the second data, and in the data (555) subjected to the spatial filtering processing, the spectral response in the wave number space may be extracted for each section (666) to be monitored in the metal body. The visualization of the extraction and the separation of the peculiar points (discrimination between structural body points and damaged points) can be provided by the spectral response in the wave number space obtained after data cleansing by using the spatial filter.

The processing device may perform the interpolation processing of the movement distance samplings so that samplings of the movement distance in the second data are performed at equal intervals. The spatial filtering processing may be performed on the second data subjected to the interpolation processing. Since the interpolation is thus performed so that the samplings of the movement distance are performed at equal intervals, the spatial filtering processing can be performed.

The processing device may perform the continuous wavelet analysis to extract the spectral response in the wave number space for each of sections of the second data. As a result, the movement distance at which the spatial frequency component changes can be identified for each section. The processing device may perform the signal separation by the discrete wavelet analysis to extract the spectral response in the wave number space for each of sections of the second data, and the continuous wavelet analysis may be used for the separated signal.

The processing device may perform the short-time Fourier transform to extract the spectral response in the wave number space for each of sections of the second data. In this case, the metal body may be in the form of being cyclically arranged along the relative moving direction of the moving body. As a result, the cyclic change on the structure of the metal body can be detected.

The magnetic detection device may have a plurality of magnetic sensor units arranged in a direction perpendicular to the relative moving direction of the moving body.

[Reference Signs List]

| 1 | Metal monitoring apparatus |
|---|---|
| 2 | Magnetic detection device |
| 3 | Distance detection device |
| 4 | Processing device |
| 5, 5A-1 to 5A-N, 5B-1 to 5B-N | Oscillation coil |
| 6, 6-1 to 6-N | Reception coil |
| 21 | Magnetic sensor unit |
| 100 | Moving body |
| 200 | Metal body |
| 202 | Peculiar point (structural body point and damaged point existing in metal body) |

**Claims**

1. A metal body monitoring apparatus, comprising:

   a magnetic detection device having a magnetic sensor unit that is provided on a moving body relatively moving over a metal body, and detects a leakage magnetic field generated from the metal body in a non-contact manner;
   a distance detection device provided on the moving body and detecting a movement distance relative to the metal body of the moving body; and
   a processing device connected to the magnetic detection device and the distance detection device,
   wherein the processing device
   converts first data representing a time-series of a detection signal strength from the magnetic detection device into second data representing a relationship between a movement distance and the detection signal strength based on the movement distance at each time point detected by the distance detection device,
   extracts a spectral response in a wave number space specified from the second data, and
   outputs monitoring information which is information based on the extracted spectral response.

2. The metal body monitoring apparatus according to claim 1, wherein

   output of the monitoring information is a display of the monitoring information, and
   the monitoring information is information indicating a correspondence between a spatial frequency and a movement distance of the moving body.

3. The metal body monitoring apparatus according to claim 2, wherein

   the correspondence is a color contour of an orthogonal coordinate system of a first axis corresponding to the spatial frequency and a second axis corresponding to the movement distance of the moving body, and
   a color indicator in accordance with a detection signal strength is arranged in the orthogonal coordinate system.

4. The metal body monitoring apparatus according to claim 1, wherein

   the processing device
   performs spatial filtering processing in accordance with a size required for monitoring the metal body, on the second data, and
   in data subjected to the spatial filtering processing, a spectral response in a wave number space is extracted for each of sections to be monitored in the metal body.

5. The metal body monitoring apparatus according to claim 4, wherein

   the processing device performs interpolation processing of samplings of a movement distance in the second data so that the samplings are performed at equal intervals, and
   the spatial filtering processing is performed on the second data subjected to the interpolation processing.

6. The metal body monitoring apparatus according to claim 4, wherein
the processing device performs continuous wavelet analysis to extract the spectral response in the wave number space for each of the sections.

7. The metal body monitoring apparatus according to claim 4, wherein
the processing device performs a signal separation by discrete wavelet analysis to extract the spectral response in the wave number space for each of the sections, and continuous wavelet analysis is used for the separated signal.

8. The metal body monitoring apparatus according to claim 4, wherein
the processing device performs a short-time Fourier transform to extract the spectral response in the wave number space for each of the sections.

9. The metal body monitoring apparatus according to claim 8, wherein
the metal body may be in the form of being cyclically arranged along a relative moving direction of the moving body.

10. The metal body monitoring apparatus according to claim 1, wherein
the magnetic detection device has a plurality of magnetic sensor units arranged in a direction perpendicular to a relative moving direction of the moving body.

11. A metal body monitoring method, causing a computer to execute:

converting first data representing a time-series of a detection signal strength from a magnetic detection device into second data representing a relationship between a movement distance and the detection signal strength based on the movement distance at each time point detected by a distance detection device;
extracting a spectral response in a wave number space specified from the second data; and
outputting monitoring information which is information based on the extracted spectral response,
wherein the magnetic detection device is a device having a magnetic sensor unit that is provided on a moving body relatively moving over a metal body, and detects a leakage magnetic field generated from the metal body in a non-contact manner, and
the distance detection device is a device that is provided on the moving body and detects a movement distance relative to the metal body of the moving body.

12. A computer program, causing a computer to execute:

converting first data representing a time-series of a detection signal strength from a magnetic detection device into second data representing a relationship between a movement distance and the detection signal strength based on the movement distance at each time point detected by a distance detection device;
extracting a spectral response in a wave number space specified from the second data; and
outputting monitoring information which is information based on the extracted spectral response,
wherein the magnetic detection device is a device having a magnetic sensor unit that is provided on a moving body relatively moving over a metal body, and detects a leakage magnetic field generated from the metal body in a non-contact manner, and
the distance detection device is a device that is provided on the moving body and detects a movement distance relative to the metal body of the moving body.

FIG. 1

# FIG. 2

# FIG. 3

# FIG. 4

# FIG. 5

# FIG. 6

# FIG. 7A

PROCESS 1

PROCESS 2

PROCESS 3

# FIG. 7B

PROCESS 4

444

PASSBAND WIDTH

INTENSITY

3dB

(dB) 1m⁻¹  50m⁻¹

SPATIAL FREQUENCY (m⁻¹)

DETECTION SIGNAL 333

MOVEMENT DISTANCE

DETECTION SIGNAL 555

MOVEMENT DISTANCE

PROCESS 5

DETECTION SIGNAL 555 666

MOVEMENT DISTANCE

CONTINUOUS WAVELET ANALYSIS

b

SPATIAL FREQUENCY

$1/a_3$  $a_3\Delta$  $\Omega/a_3$

$1/a_2$  $a_2\Delta$  $\Omega/a_2$

$1/a_1$  $a_1\Delta$  $\Omega/a_1$

MOVEMENT DISTANCE

PROCESS 6

SPATIAL FREQUENCY

88

89

MOVEMENT DISTANCE

SIGNAL(V)
Max

Min

# FIG. 7C

PROCESS 5

DETECTION
SIGNAL

666

DETECTION
SIGNAL

MOVEMENT
DISTANCE

DETECTION
SIGNAL

SHIFT PARTITION
(AT 1 mm INTERVALS)

1111

1m

MOVEMENT DISTANCE

## FIG. 8A

| ID | DISTANCE ACQUIRED BY DISTANCE DETECTION DEVICE (mm) | DETECTION SIGNAL ACQUIRED BY MAGNETIC DETECTION DEVICE (V) |
|---|---|---|
| 1 | 0 | 1 |
| 2 | 0.5 | 1.1 |
| 3 | 1.3 | 1.2 |
| 4 | 1.8 | 1.3 |
| 5 | 2.2 | 1.4 |
| 6 | 2.9 | 1.7 |
| 7 | 3.1 | 1.8 |
| ⋮ | ⋮ | ⋮ |
| i | $X_i$ | $Y_i$ |
| i + 1 | $X_{i+1}$ | $Y_{i+1}$ |
| ⋮ | ⋮ | ⋮ |

## FIG. 8B

| INTERPOLATION PROCESSING ID | EQUALLY SAMPLED DISTANCE (mm) | DETECTION SIGNAL ACQUIRED IN INTERPOLATION PROCESSING (V) |
|---|---|---|
| 1 | 0 | 1 |
| 2 | 1 | 1.1625 |
| 3 | 2 | 1.35 |
| 4 | 3 | 1.75 |
| ⋮ | ⋮ | ⋮ |
| a | $X_a$ | $Y_a$ |
| ⋮ | ⋮ | ⋮ |

# FIG. 9

AT LEVEL 0

DETECTION
SIGNAL

$g_0(t)$

DATA EXAMPLE

0 1 2 3 4 5 6 7 8

APPROXIMATION
PROCESSING

AT LEVEL 1

DETECTION
SIGNAL

$g_1(t)$

DATA EXAMPLE

0 2 4 6 8

APPROXIMATION
PROCESSING

AT LEVEL 2

DETECTION
SIGNAL

$g_2(t)$

DATA EXAMPLE

0 4 8

APPROXIMATION
PROCESSING

AT LEVEL 3

DETECTION
SIGNAL

$g_3(t)$

DATA EXAMPLE

0 4 8

# FIG. 10

AT LEVEL 0

$g_0(t)$

DETECTION
SIGNAL

$g_0(t) = g_3(t) + h_1(t) + h_2(t) + h_3(t)$

0 1 2 3 4 5 6 7 8  DATA
EXAMPLE

APPROXIMATION
PROCESSING

DECOMPOSITION

AT LEVEL 1

DETECTION
SIGNAL

$g_1(t)$

DETECTION
SIGNAL

$h_1(t) = g_0(t) - g_1(t)$

0   2   4   6   8  DATA
EXAMPLE

0 1 2   3 4 5 6 7 8  DATA
EXAMPLE

APPROXIMATION
PROCESSING

DECOMPOSITION

AT LEVEL 2

DETECTION
SIGNAL

$g_2(t)$

DETECTION
SIGNAL

$h_2(t) = g_1(t) - g_2(t)$

0       4       8  DATA
EXAMPLE

0   2   4   6   8  DATA
EXAMPLE

APPROXIMATION
PROCESSING

DECOMPOSITION

AT LEVEL 3

DETECTION
SIGNAL

$g_3(t)$

DETECTION
SIGNAL

$h_3(t) = g_2(t) - g_3(t)$

0       4       8  DATA
EXAMPLE

0       4       8  DATA
EXAMPLE

# FIG. 11

# FIG. 12

# FIG. 13

```
                    START
                      │
        ┌─────────────┴─────────────┐
        │                           │
        ▼ S2                        ▼ S14
┌─────────────────┐         ┌─────────────────┐
│  METAL BODY     │         │   ACQUIRE SP    │
│ MONITORING DATA │         └─────────────────┘
└─────────────────┘                 │
        │                           ▼ S16
        ▼ S4                ┌─────────────────┐
┌─────────────────┐        │ CONVERT SP TO SK│
│ SPECTRAL RESPONSE│◄──────└─────────────────┘
│      DATA       │
└─────────────────┘
        │
        ▼ S6
   ╱─────────╲
  ╱ OUTSIDE OF ╲   Yes
 ╱  REFERENCE   ╲──────┐
 ╲   RANGE?     ╱      │
  ╲           ╱       │
   ╲─────────╱        │
        │ No          ▼ S8
        │      ┌─────────────────┐
        │      │   DISCRIMINATE  │
        │      └─────────────────┘
        │             │
        ▼             ▼           S18
┌─────────────────────────────────────┐
│          GENERATE RESULT            │
└─────────────────────────────────────┘
                 │
                 ▼                 S20
┌─────────────────────────────────────┐
│           OUTPUT RESULT             │
└─────────────────────────────────────┘
                 │
                 ▼
               END
```

## FIG. 14

## FIG. 15

# FIG. 16

# FIG. 17

## INTERNATIONAL SEARCH REPORT

International application No.

**PCT/JP2024/001076**

| | |
|---|---|
| **A.** | **CLASSIFICATION OF SUBJECT MATTER** |

*G01N 27/83*(2006.01)i

FI:   G01N27/83

According to International Patent Classification (IPC) or to both national classification and IPC

| | |
|---|---|
| **B.** | **FIELDS SEARCHED** |

Minimum documentation searched (classification system followed by classification symbols)

G01N27/72-G01N27/9093

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| A | JP 2019-194552 A (MITSUBISHI ELECTRIC CORPORATION) 07 November 2019 (2019-11-07)<br>    paragraphs [0015]-[0047], fig. 1-6 | 1-12 |
| A | JP 8-160014 A (TOKYO GAS CO., LTD.) 21 June 1996 (1996-06-21)<br>    entire text | 1-12 |
| A | JP 2005-231427 A (B M C KK) 02 September 2005 (2005-09-02)<br>    entire text | 1-12 |
| A | JP 2017-013974 A (HITACHI BUILDING SYST CO., LTD.) 19 January 2017 (2017-01-19)<br>    entire text | 1-12 |
| A | WO 2015/072365 A1 (NTN CORPORATION) 21 May 2015 (2015-05-21)<br>    entire text | 1-12 |
| A | JP 7241907 B2 (MITSUBISHI ELECTRIC CORPORATION) 17 March 2023 (2023-03-17)<br>    entire text | 1-12 |

☑ Further documents are listed in the continuation of Box C.      ☑ See patent family annex.

| | |
|---|---|
| * | Special categories of cited documents: |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **06 February 2024** | **20 February 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

International application No.

**PCT/JP2024/001076**

### C. DOCUMENTS CONSIDERED TO BE RELEVANT

| Category* | Citation of document, with indication, where appropriate, of the relevant passages | Relevant to claim No. |
|---|---|---|
| A | JP 2019-200157 A (SHIMADZU CORPORATION) 21 November 2019 (2019-11-21) <br> entire text | 1-12 |
| A | US 2013/0147471 A1 (NDT TECHNOLOGIES INC.) 13 June 2013 (2013-06-13) <br> entire text | 1-12 |

Form PCT/ISA/210 (second sheet) (July 2022)

## INTERNATIONAL SEARCH REPORT
### Information on patent family members

International application No.

**PCT/JP2024/001076**

| Patent document cited in search report | | | Publication date (day/month/year) | Patent family member(s) | | | Publication date (day/month/year) |
|---|---|---|---|---|---|---|---|
| JP | 2019-194552 | A | 07 November 2019 | (Family: none) | | | |
| JP | 8-160014 | A | 21 June 1996 | (Family: none) | | | |
| JP | 2005-231427 | A | 02 September 2005 | (Family: none) | | | |
| JP | 2017-013974 | A | 19 January 2017 | CN | 106324081 | A | |
| WO | 2015/072365 | A1 | 21 May 2015 | JP | 2015-099043 | A | |
| JP | 7241907 | B2 | 17 March 2023 | CN | 114616464 | A | |
| JP | 2019-200157 | A | 21 November 2019 | (Family: none) | | | |
| US | 2013/0147471 | A1 | 13 June 2013 | WO | 2013/147471 | A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022052864 A